# FASCICULE DE BREVET EUROPEEN

(11) **EP 3 676 825 B1**
(45) Date de publication et mention de la délivrance du brevet: **08.10.2025**
(21) Numéro de dépôt: 18772850.6
(22) Date de dépôt: 30.08.2018
(51) Int. Cl.: G10K 11/00, B32B 3/12, B64C 1/40, G10K 11/16, G10K 11/172

(54) **PANNEAU ACOUSTIQUE POUR NACELLE D'ENSEMBLE PROPULSIF D'AÉRONEF, ET PROCÉDÉS DE FABRICATION S'Y RAPPORTANT**
AKUSTIKPLATTE FÜR GONDEL EINER FLUGZEUGANTRIEBSEINHEIT UND ZUGEHÖRIGE HERSTELLUNGSVERFAHREN
ACOUSTIC PANEL FOR AIRCRAFT PROPULSION UNIT NACELLE, AND RELATED PRODUCTION METHODS

(30) Priorité: 31.08.2017 FR 1758030; 12.04.2018 FR 1853210
(43) Date de publication de la demande: 08.07.2020
(73) Titulaire: Safran Nacelles, 76700 Gonfreville-l'Orcher (FR)
(72) Inventeur: DESJOYEAUX, Bertrand, 76700 Gonfreville-l'Orcher (FR); VERSAEVEL, Marc, 76700 Gonfreville-l'Orcher (FR)
(74) Mandataire: Germain Maureau
(86) Numéro de dépôt international: PCT/FR2018/052134
(87) Numéro de publication internationale: WO 2019/043344

(56) Documents cités:
- WO-A1-2016/102894
- WO-A1-2016/102894
- GB-A- 2 452 476
- US-A- 3 831 710
- US-A- 3 831 710
- US-A- 4 150 732
- US-A- 4 150 732
- US-A1- 2013 299 274
- US-A1- 2013 299 274
- US-A1- 2015 060 194
- US-A1- 2015 292 413
- US-A1- 2015 292 413
- US-A1- 2017 122 341
- US-A1- 2017 122 341
- US-B1- 6 274 216
- US-B1- 6 274 216
- US-B1- 9 514 734
- US-B1- 9 514 734

## Description

L'invention concerne un panneau acoustique à résonateurs qui est particulièrement adapté pour être agencé dans un volume réduit. L'invention concerne aussi des procédés de fabrication d'un tel panneau ainsi qu'un ensemble propulsif d'aéronef comprenant un tel panneau.

Il est connu d'utiliser un panneau acoustique pour absorber un bruit selon le principe de résonateur de Helmholtz, un tel panneau acoustique équipe par exemple un ensemble propulsif d'un aéronef, comme une nacelle, qui loge un moteur ou un turboréacteur, pour limiter la propagation du bruit généré par le moteur ou par tout autre organe bruyant logé dans la nacelle.

A cet effet, le panneau acoustique comporte généralement une peau acoustique avant perforée, une peau arrière pleine et une âme alvéolaire, du type nid d'abeille, qui est interposée entre les deux peaux.

L'âme alvéolaire forme une pluralité de cellules acoustiques accolées, chaque cellule étant délimitée par une paroi périphérique, et chaque cellule s'étendant suivant un axe principal longitudinal correspondant à un axe de propagation du bruit.

La peau acoustique est agencée en regard de la source sonore à atténuer, et elle présente des perforations pour permettre le passage des ondes sonores à travers la peau acoustique, de sorte que l'onde sonore pénètre dans les cellules de l'âme alvéolaire.

La longueur des cellules permet de déterminer la fréquence à laquelle l'atténuation acoustique des cellules est maximale.

Typiquement, une âme alvéolaire d'une épaisseur de 30 millimètres est adaptée pour atténuer des fréquences proches de 2000 Hertz, et une âme alvéolaire d'une épaisseur de 70 millimètres est adaptée pour atténuer des fréquences proches de 880 Hertz.

Les cellules s'étendent généralement perpendiculairement à la peau acoustique, de façon rectiligne. Par conséquent, la longueur acoustique des cellules est sensiblement égale à la hauteur de l'âme alvéolaire.

Les ensembles propulsifs des aéronefs évoluent vers une géométrie de plus grand diamètre, donc avec des éléments rotatifs, comme des soufflantes, plus lents, les éléments rotatifs présentant par conséquent une signature acoustique plus basse fréquence.

De plus, les nacelles des ensembles propulsifs tendent à devenir plus courtes et plus minces de manière à limiter la trainée.

Les panneaux acoustiques qui équipent la nacelle doivent donc présenter une épaisseur limitée, tout en permettant d'atténuer efficacement les basses fréquences.

De même, Il y a un besoin d'atténuer des basses fréquences émises par exemple par les moteurs d'avions à hélice, tout en limitant l'épaisseur occupée par le panneau acoustique.

On connait également un panneau acoustique qui est décrit et représenté dans le document US 9 514 734, et qui comporte une peau acoustique perforée et une pluralité de cellules acoustiques qui sont délimitées entre elles par des cloisons.

Aussi les documents GB 2 452 476 A et US 2015/060194 A1 divulguent des panneaux acoustiques selon l'art antérieur.

Certaines cellules adjacentes sont interconnectées entre elles par une large ouverture réalisée dans la cloison séparatrice de façon à permettre la propagation des ondes dans la cellule ainsi connectée et augmenter la longueur parcourue par les ondes sonores, la longueur des cellules étant adaptée pour atténuer une fréquence prédéterminée du spectre du bruit.

Un inconvénient de ce type de panneau acoustique à cellules interconnectées est la réduction de la surface de la peau acoustique traitée acoustiquement.

En effet, selon ce document, la peau acoustique présente des portions qui ne sont pas perforées et qui sont agencées en vis-à-vis d'une partie des cellules interconnectées, les portions non perforées de la peau acoustique ne participant pas au traitement acoustique du bruit.

La présente invention vise notamment à résoudre cet inconvénient et se rapporte pour ce faire à un panneau acoustique qui présente une épaisseur limitée et qui est adapté pour atténuer des basses fréquences.

La présente invention vise aussi à fournir des procédés particulièrement adaptés à la fabrication d'un tel panneau acoustique.

Dans ce but, l'invention est un panneau acoustique selon la revendication 1 et un procédé selon la revendication 9. Le panneau acoustique concerne un panneau acoustique à résonateurs pour nacelle d'ensemble propulsif d'aéronef, comportant une pluralité de cellules acoustiques accolées qui forment une âme alvéolaire, chaque cellule étant délimitée par une paroi périphérique, et chaque cellule s'étendant suivant un axe principal longitudinal correspondant à un axe de propagation des ondes sonores, depuis une extrémité avant jusqu'à une extrémité arrière. Selon l'invention, au moins une cellule comporte au moins un obstacle partiel qui s'étend transversalement à l'axe principal de la cellule associée, depuis la paroi de ladite cellule, l'au moins un obstacle présentant un bord d'extrémité libre qui délimite un passage avec une partie de la paroi en vis-à-vis pour augmenter la longueur du chemin parcouru par les ondes sonores à travers la cellule.

De préférence, l'au moins un obstacle partiel peut s'étendre perpendiculairement, ou globalement perpendiculairement à l'axe principal de la cellule associée.

Un tel panneau acoustique permet, à hauteur de cellule égale et sans perte de surface traitée acoustique, d'atténuer des fréquences de bruit plus basses.

Par conséquent, l'invention permet de limiter le volume du panneau acoustique ainsi que sa masse.

Selon l'invention, moins une cellule comporte un premier obstacle et un second obstacle, le premier obstacle et le second obstacle étant décalés suivant l'axe principal, le passage délimité par le bord d'extrémité libre du premier obstacle et le passage délimité par le bord d'extrémité libre du second obstacle étant décalés radialement pour former une chicane prévue pour augmenter la longueur du chemin parcouru par les ondes sonores à travers la cellule associée.

Dans un mode de réalisation, une partie de l'extrémité libre du premier obstacle et une partie de l'extrémité libre du second obstacle peuvent être superposées suivant l'axe principal de la cellule associée, pour empêcher les ondes sonores de dessiner une trajectoire directe depuis l'extrémité avant jusqu'à l'extrémité arrière de la cellule associée.

De préférence, chaque obstacle peut avoir une dimension environ égale aux deux tiers de la section transversale de la cellule associée.

Selon une autre caractéristique, les cellules peuvent être acoustiquement indépendantes.

On entend par l'expression « acoustiquement indépendantes » que les cellules n'ont pas d'orifice de communication entre elles ou que ces orifices, comme des orifices de drainage de fluide notamment, sont de faibles dimensions et en faible nombre, de façon à ne pas dévier les ondes acoustiques.

Dans un mode de réalisation, au moins une des cellules peut comporter au moins un septum acoustiquement perméable qui peut s'étendre en travers de la cellule associée.

Selon un exemple de réalisation, le septum peut s'étendre depuis le bord d'extrémité libre de l''au moins un obstacle, jusqu'à la paroi de la cellule associée.

Selon un autre exemple de réalisation, le septum peut s'étendre depuis le bord d'extrémité libre du premier obstacle, jusqu'au bord d'extrémité libre du second obstacle.

Dans un mode de réalisation, le panneau acoustique peut combiner des cellules avec au moins un obstacle et des cellules sans obstacle.

De préférence, le panneau acoustique peut comporter une peau acoustique avant qui est perforée et une peau arrière pleine, l'âme alvéolaire étant interposée entre lesdites peaux.

Selon l'invention, l'au moins un obstacle peut comprendre une partie centrale qui s'étend transversalement par rapport à l'axe principal de la cellule associée et deux parties latérales qui peuvent s'étendre chacune suivant une direction oblique par rapport audit axe principal de la cellule associée. Pour chacune des deux parties latérales, la direction oblique étant comprise entre 30° et 60° par rapport à l'axe principal.

Dans un mode de réalisation, pour chaque cellule ou pour une ou plusieurs cellules, la paroi périphérique peut comprendre six faces formant une cellule hexagonale, l'au moins un obstacle étant fixé à au moins deux faces adjacentes de la cellule associée.

Dans un mode de réalisation, pour chaque cellule ou pour une ou plusieurs cellules, la paroi périphérique peut comprendre six faces formant une cellule hexagonale, l'au moins un obstacle étant fixé à au moins deux faces non adjacentes de la cellule associée.

Dans un autre mode de réalisation, pour chaque cellule ou pour une ou plusieurs cellules, la paroi périphérique peut comprendre six faces formant une cellule hexagonale, l'au moins un obstacle étant fixé à au moins deux faces adjacentes ou non adjacentes de la cellule associée.

Lorsqu'une cellule est hexagonale, cette cellule peut former un hexagone régulier ou non. Notamment, les dimensions de chaque face peuvent être différentes d'une face à une autre et/ou l'angle formé par deux faces adjacentes peut différer d'une paire de faces adjacentes à une autre paire de faces adjacentes.

L'invention concerne aussi une nacelle d'ensemble propulsif d'aéronef, cette nacelle comprenant au moins un panneau acoustique tel que décrit ci-dessus.

L'invention concerne aussi des procédés de fabrication d'un tel panneau acoustique.

Selon une première variante de procédé de fabrication d'un panneau acoustique selon l'une quelconque des revendications 1 à 7 conforme à l'invention, l'au moins un obstacle est réalisé à partir d'au moins un ruban. Ce procédé comprend :
- une étape de fixation dans laquelle l'au moins un ruban est fixé à une première plaque, et dans laquelle une deuxième plaque est fixée à la première plaque par des parties nodales respectives,
- une étape de formage dans laquelle des parties non-nodales de la première et de la deuxième plaque sont conformées de sorte que chaque partie non-nodale de la première plaque constitue, avec une partie non-nodale respective de la deuxième plaque, ladite paroi périphérique délimitant une cellule correspondante de l'âme alvéolaire, et de sorte qu'une partie de l'au moins un ruban forme l'au moins un obstacle dans cette cellule.

Dans un mode de réalisation, lors de l'étape de fixation, l'au moins un ruban peut s'étendre au travers desdites parties nodales de la première et de la deuxième plaque.

Dans un mode de réalisation, une bandelette peut être fixée à une extrémité de l'au moins un ruban lors de l'étape de fixation. Lors de l'étape de formage, ladite partie de l'au moins un ruban formant l'au moins un obstacle peut être conformée par traction de la bandelette.

Dans un mode de réalisation, au moins deux rubans sont fixés respectivement à la première plaque et/ou à la deuxième plaque lors de l'étape de fixation, et l'étape de formage est réalisée de sorte qu'une partie respective de chacun desdits au moins deux rubans forme chacune un obstacle respectif. Autrement dit, des parties desdits au moins deux rubans peuvent ainsi former au moins deux obstacles dans une cellule. Dans ce mode de réalisation, une bandelette peut être fixée à une extrémité respective desdits au moins deux rubans lors de l'étape de fixation. Lors de l'étape de formage, les parties des rubans formant les obstacles peuvent être conformées par traction de la bandelette.

Dans un mode de réalisation, l'au moins un obstacle peut être fixé à trois faces adjacentes de la cellule associée, ces trois faces adjacentes étant des parties de la première plaque et/ou de la deuxième plaque.

Dans un mode de réalisation, une première plaque et une deuxième plaque fixées ensemble par des parties nodales, dans lequel des parties non-nodales de la première et de la deuxième plaque forment des parois délimitant des cellules de l'âme alvéolaire, on réalise une étape de fixation de l'au moins un premier obstacle à une partie non-nodale respective de la première et de la deuxième plaque.

Dans un mode de réalisation, une première patte de fixation de l'au moins un premier obstacle peut être fixée à une partie non-nodale de la première plaque, la première patte s'étendant en direction d'une première extrémité de la cellule associée, et une deuxième patte de fixation de l'au moins un premier obstacle peut être fixée à une partie non-nodale de la deuxième plaque, la deuxième patte s'étendant en direction d'une deuxième extrémité de la cellule associée.

Dans un autre mode de réalisation, une première patte de fixation de l'au moins un premier obstacle peut être fixée à une partie non-nodale de la première plaque, la première patte s'étendant en direction de l'une des extrémités de la cellule associée, et une deuxième patte de fixation de l'au moins un premier obstacle peut être fixée à une partie non-nodale de la deuxième plaque. La deuxième patte peut s'étendre soit en direction de la même extrémité de la cellule associée soit en direction de l'autre extrémité de la cellule associée.

D'autres caractéristiques et avantages de l'invention apparaîtront à la lecture de la description nullement limitative qui suit et des figures annexées, dans lesquelles :
- La figure 1 est une vue schématique en section qui illustre une nacelle équipée d'une pluralité de panneaux acoustiques selon l'invention ;
- La figure 2 est une vue schématique en section transversale qui illustre des cellules d'un des panneaux acoustiques de la figure 1 équipées de deux obstacles formant chicane ;
- La figure 3 est une vue schématique en section transversale qui illustre des cellules d'un des panneaux acoustiques de la figure 1 équipé de trois obstacles formant chicane ;
- La figure 4 est une vue schématique en section transversale qui illustre des cellules d'un des panneaux acoustiques de la figure 1 équipées chacune de deux obstacles non plans formant chicane ;
- La figure 5a est une vue schématique en perspective avec arrachement qui illustre une cellule hexagonale d'un des panneaux acoustiques de la figure 1 équipée de deux obstacles formant chicane ;
- La figure 5b est une vue schématique d'une cellule qui illustre la superposition de deux obstacles ;
- La figure 6 est une vue schématique en perspective avec arrachement qui illustre des cellules parallélépipédiques d'un des panneaux acoustiques de la figure 1 équipées chacune de deux obstacles formant chicane ;
- La figure 7 est une vue schématique en section transversale qui illustre des cellules d'un des panneaux acoustiques de la figure 1 équipées chacune d'un septum qui relie un obstacle sur la paroi ;
- La figure 8 est une vue schématique en section transversale qui illustre des cellules d'un des panneaux acoustiques de la figure 1 équipées chacune d'un septum qui relie deux obstacles ;
- La figure 9 est une vue schématique en section transversale qui illustre des cellules d'un des panneaux acoustiques de la figure 1 équipées chacune d'un septum transversal ;
- La figure 10 est une vue schématique en section transversale qui illustre des cellules d'un des panneaux acoustiques de la figure 1 équipé d'un seul obstacle ;
- La figure 11 est une vue schématique en section transversale illustrant un panneau acoustique selon l'invention qui est agencé dans une virole d'entrée d'air de la nacelle de la figure 1 et qui permet un traitement acoustique distribué par zone ;
- La figure 12 est un graphique qui trace, pour différents motifs de cellules selon l'invention, la réactance desdits motifs suivant l'échelle de l'axe des ordonnées en fonction des fréquences en Hertz d'ondes acoustiques selon l'échelle de l'axe des abscisses ;
- La figure 13 est une vue schématique partielle d'une plaque et d'un ruban intercellulaire pour fabriquer un panneau acoustique selon l'invention ;
- La figure 14 est une vue schématique partielle d'une plaque et de plusieurs rubans intracellulaires pour fabriquer un panneau acoustique selon l'invention ;
- La figure 15 est une vue schématique partielle de la plaque et du ruban de la figure 13 comprenant en outre une bandelette pour conformer un obstacle ;
- La figure 16 est une vue schématique d'un ruban pour fabriquer un panneau acoustique selon l'invention ; ce ruban comprenant des zones de fixation rabattues ;
- Les figures 17A et 17B sont des vues schématiques partielles d'une plaque et d'un ruban intracellulaire pour fabriquer un panneau acoustique selon l'invention, en position à plat (figure 17A) et en position déployée (figure 17B) ;
- Les figures 17C et 17D sont des vues schématiques partielles d'une plaque et d'un ruban intracellulaire pour fabriquer un panneau acoustique selon l'invention, en position à plat (figure 17C) et en position déployée (figure 17D) ;
- La figure 18 est une vue schématique d'une cellule de panneau acoustique selon l'invention ;
- La figure 19 est une vue schématique partielle d'une plaque et de plusieurs rubans intracellulaires pour fabriquer un panneau acoustique selon l'invention ;
- La figure 20 est une vue schématique partielle d'une plaque pour fabriquer un panneau acoustique selon l'invention, en position à plat ;
- La figure 21 est une vue schématique partielle en perspective de la plaque de la figure 20 en position partiellement déployée ;
- La figure 22 est une vue schématique partielle en perspective de la plaque de la figure 20 en position déployée ;
- La figure 23 est une vue schématique partielle en perspective de plaques pour fabriquer un panneau acoustique selon l'invention, en position déployée ;
- La figure 24 est une vue schématique partielle en perspective de plaques et de rubans pour fabriquer un panneau acoustique selon l'invention ;
- La figure 25 est une vue schématique partielle de rubans pour fabriquer un panneau acoustique tel qu'illustré à la figure 24.

Les éléments identiques ou similaires sont repérés par des signes de référence identiques sur l'ensemble des figures.

Dans la description et les revendications, on adoptera à titre non limitatif la terminologie longitudinal, vertical et transversal en référence au trièdre L, V, T indiqué aux figures.

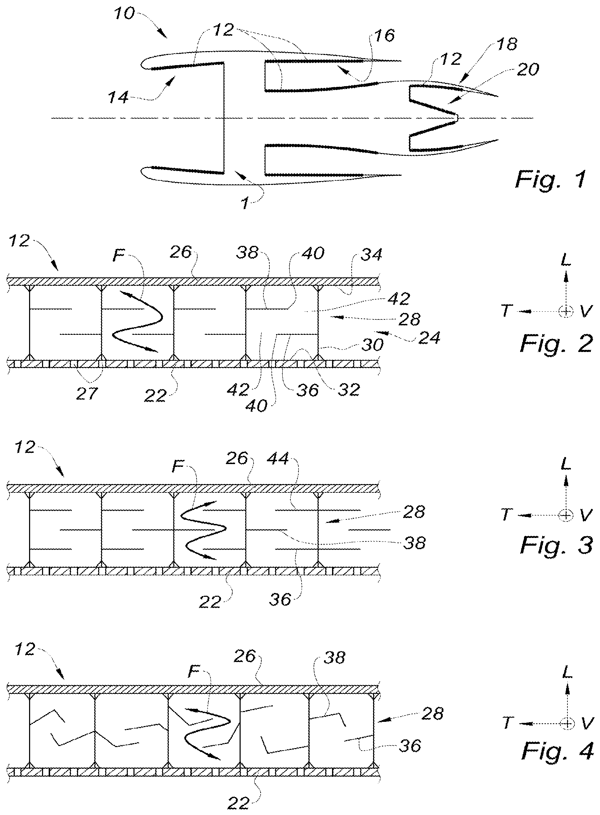

On utilisera également à titre non limitatif les expressions « avant » et « arrière » en référence à la partie inférieure et à la partie supérieure respectivement des figures 2 à 11.

La figure 1 montre une nacelle 10 équipée d'une pluralité de panneaux acoustiques 12 à résonateurs d'atténuation acoustique représentés schématiquement en trait fort. Certains ou la totalité de ceux-ci, ou d'autres panneaux acoustiques peuvent être totalement ou partiellement équipés d'âmes alvéolaires selon l'invention.

Les panneaux acoustiques 12 sont conçus pour atténuer le bruit émis par les organes qui sont logés dans la nacelle 10, comme un moteur ou une soufflante (non représentés).

Selon des exemples de réalisation de l'invention décrits ici, les panneaux acoustiques 12 sont intégrés dans une virole d'entrée d'air 14, dans un capot de soufflante ou la veine secondaire 16 et dans une tuyère 20 d'éjection.

En référence à la figure 2, qui illustre un premier exemple de réalisation d'un panneau acoustique 12, le panneau acoustique 12 comporte successivement, d'avant en arrière suivant l'axe longitudinal L et suivant la direction de propagation du bruit, une peau acoustique 22 avant, une âme alvéolaire 24 et une peau arrière 26 pleine.

La peau acoustique 22 avant et la peau arrière 26 s'étendent parallèlement entre elles et transversalement. La direction L longitudinale est sensiblement perpendiculaire à la surface locale de la peau acoustique 22.

Aussi, la peau acoustique 22 avant présente une pluralité de perforations 27, ou une perméabilité formée par un grillage, qui sont adaptées pour permettre aux ondes sonores de pénétrer dans l'âme alvéolaire 24.

L'âme alvéolaire 24 comporte une pluralité de cellules 28 acoustiques qui sont accolées transversalement et verticalement entre elles pour former une structure creuse telle que par exemple en « nid d'abeille ».

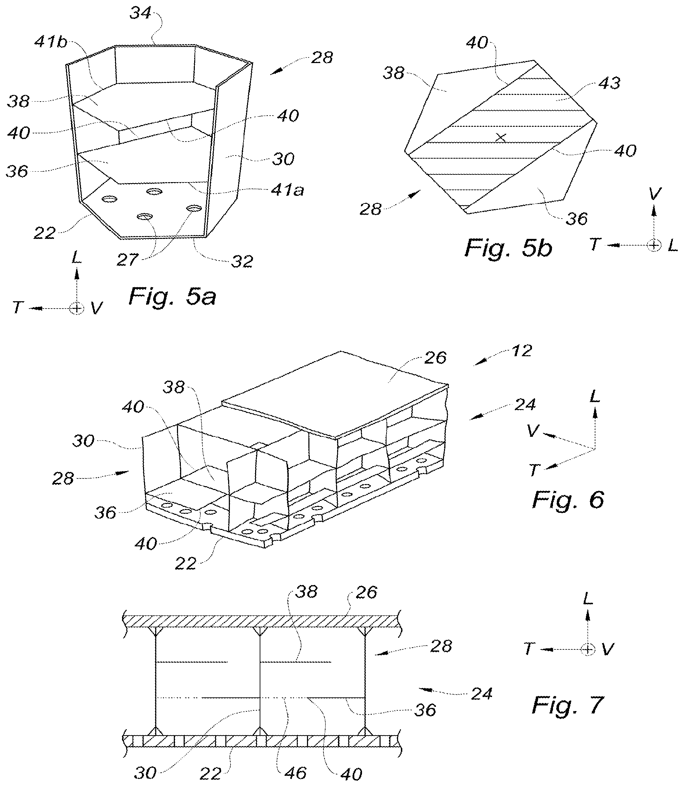

Chaque cellule 28 est délimitée par une paroi 30 périphérique s'étendant sensiblement parallèlement à la direction longitudinale depuis la peau acoustique 22 jusqu'à la peau arrière 26. La forme de la cellule 28 peut être de section transversale hexagonale, comme on peut le voir à la figure 5a, ou de forme rectangulaire, comme illustré à la figure 6, ou carré ou toute autre forme géométrique.

Aussi, chaque cellule 28 s'étend suivant un axe principal longitudinal, correspondant globalement à un axe de propagation des ondes sonores, depuis une extrémité avant 32 de la cellule 28 en appui sur la peau acoustique 22, jusqu'à une extrémité arrière 34 en appui sur la peau arrière 26.

On notera que les cellules 28 sont indépendantes acoustiquement. Par les termes « cellules acoustiquement indépendantes », on considère des cellules dont les parois 30 ne propagent pas significativement les ondes acoustiques d'une cellule vers une autre. Par ces termes, on considère des cellules séparées par des parois étanches ou des parois perforées d'un ou quelques orifices de petites dimensions et en nombre limité dont la fonction est principalement de faciliter l'évacuation des liquides pouvant pénétrer dans les cellules. Ces orifices sont préférentiellement en nombre de deux à quatre de section unitaire de l'ordre de 1 à 4 mm², et situés dans les parois 30 des cellules, à proximité immédiate de l'extrémité arrière 34 de l'âme acoustique contre la peau arrière 26.

Les obstacles sont dits opaques aux ondes acoustiques, mais peuvent cependant être pourvus d'un dispositif de drainage pour l'évacuation de liquides, préférentiellement réalisés par un ou deux orifices par obstacle et de section de l'ordre d'1 à 2 mm² chacun.

Comme on peut le voir à la figure 2, chaque cellule 28 comporte au moins un premier obstacle 36 partiel et un second obstacle 38 partiel qui s'étendent globalement transversalement et perpendiculairement à l'axe principal de la cellule 28 associée, depuis la paroi 30 de la cellule 28.

De plus, chaque obstacle 36, 38 présente un bord d'extrémité libre 40 qui délimite un passage 42 avec la paroi 30 en vis-à-vis, pour permettre le passage des ondes sonores qui pénètrent dans la cellule 28 associée.

Les obstacles 36, 38 sont décalés en profondeur suivant l'axe principal longitudinal de la cellule 28 associée.

Les obstacles 36, 38 sont sensiblement opposés, c'est-à-dire que le premier obstacle 36 s'étend depuis un premier bord d'accroche 41a du côté gauche de la paroi 30, selon les figure 2 et 5a, et le second obstacle 38 s'étend depuis un second bord d'accroche 41b du côté droit opposé de la paroi 30, pour former une chicane prévue pour augmenter la longueur du chemin parcouru par les ondes sonores à travers la cellule 28 associée.

De plus, la longueur de chaque obstacle 36, 38 est adaptée pour que les obstacles 36, 38 se superposent en partie selon une vue en projection longitudinale sur une surface perpendiculaire à la direction longitudinale.

On a représenté à la figure 5b la surface de superposition 43 des obstacles 36, 38 selon une projection longitudinale.

Par conséquent, la surface superposée des obstacles 36, 38 projetée suivant un plan perpendiculaire à la direction L est égale à la surface de la section transversale de la cellule 28 associée et la somme des surfaces projetées des deux obstacles 36 et 38 est supérieure à la section transversale de la cellule 28.

De préférence, la surface projetée longitudinalement de chaque obstacle 36, 38 est environ égale aux deux tiers de la surface projetée de la cellule 28 associée.

Aussi, les surfaces projetées longitudinalement des deux obstacles 36, 38 présentent une surface superposée 43 qui correspond à environ un tiers de la surface projetée de la cellule 28 associée.

Ainsi, les ondes sonores suivent une trajectoire sinueuse entre les obstacles 36, 38, depuis l'extrémité avant 32 jusqu'à l'extrémité arrière 34 de la cellule 28 associée. Cette trajectoire sinueuse est donc plus longue que la distance en ligne droite entre les deux faces d'extrémités 32 et 34.

Comme illustré par la flèche F sur la figure 2, les ondes sonores suivent un chemin sinueux qui présente une longueur apparente supérieure à la longueur d'un chemin rectiligne.

On constate qu'une cellule de 30 millimètres d'épaisseur longitudinale qui comprend deux obstacles s'étendant sur environ les deux tiers de la section de la cellule associée, est équivalente à une cellule sans obstacle de 64 millimètres d'épaisseur longitudinale, en terme d'atténuation du bruit par rapport à une fréquence donnée.

De même, on constate qu'une cellule de 30 millimètres d'épaisseur longitudinale qui comprend trois obstacles s'étendant chacun sur environ les deux tiers de la section de la cellule associée, les obstacles successifs étant attachés sur des parois opposées, est équivalente à une cellule sans obstacle de 70 millimètres d'épaisseur longitudinale, en terme d'atténuation du bruit par rapport à une autre fréquence considérée.

Les cellules 28 sont réalisées en matériau composite ou en matériau métallique, en aluminium par exemple.

Aussi, les obstacles 36, 38 peuvent être collés, soudés, ou emboîtés au matériau formant les cellules 28.

Selon un autre exemple de réalisation représenté à la figure 3, qui est similaire à l'exemple représenté sur la figure 2, chaque cellule 28 comporte un troisième obstacle 44, les trois obstacles 36, 38, 44 ont des dimensions telles que deux obstacles successifs dans le sens longitudinal, présentent une surface cumulée supérieure à la section de la cellule et une surface projetée couvrant la totalité de la section. En d'autres termes les obstacles sont agencés pour imposer un chemin sinueux aux ondes sonores qui parcourent la cellule 28 associée, comme le montre la flèche F.

Selon un autre exemple de réalisation représenté à la figure 4, qui est similaire à l'exemple représenté sur la figure 2, les obstacles 36, 38 peuvent présenter des géométries non rectilignes avec des cassures, pour augmenter la longueur du chemin parcouru par les ondes sonores à travers la cellule 28 associée, comme le montre la flèche F.

Selon un autre exemple de réalisation représenté à la figure 7, qui est similaire à l'exemple représenté sur la figure 2, le premier obstacle 36 de chaque cellule 28 est prolongé par un septum 46 qui s'étend transversalement depuis le bord d'extrémité libre 40 du premier obstacle 36, jusqu'à la paroi 30 de la cellule 28, en vis-à-vis du premier obstacle 36.

Un septum est une membrane perméable ou multi-perforée qui est transparente à certaines gammes de fréquences et imperméable à d'autres gammes de fréquences. Cette disposition permettant d'atténuer plus efficacement deux domaines de fréquences.

Selon un exemple de réalisation, le septum 46 est adapté pour élargir la plage de fréquences atténuées.

Ainsi dans l'exemple de la figure 7, l'âme alvéolaire est conçue pour atténuer efficacement un premier domaine de moyennes fréquences acoustiques entre la première peau acoustique 22 et le septum 46, et le premier obstacle 36, et un autre domaine de fréquences acoustiques plus basses entre la peau acoustique 22 et la peau arrière 26, en tenant compte des obstacles partiels intermédiaires.

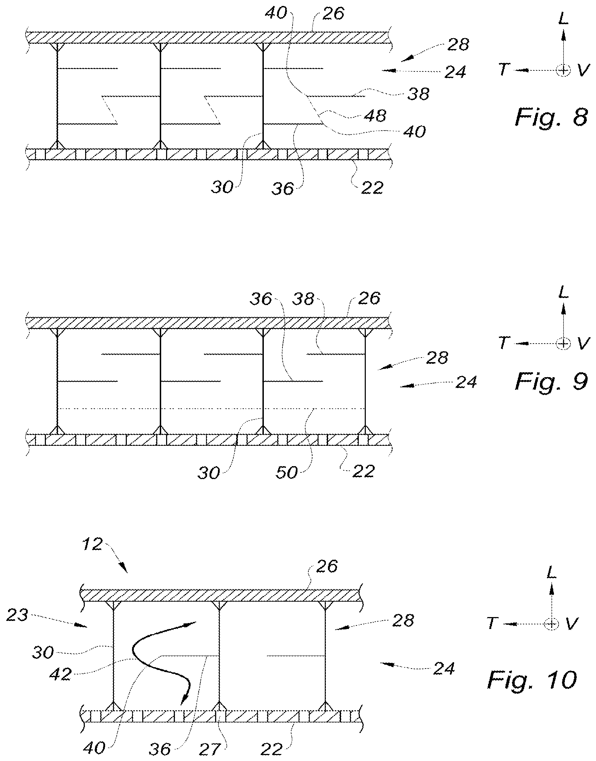

Selon un autre exemple de réalisation représenté à la figure 8, qui est similaire à l'exemple représenté sur la figure 2, un septum 48 s'étend depuis le bord d'extrémité libre 40 du premier obstacle 36, jusqu'au bord d'extrémité libre 40 du second obstacle 38.

Selon un autre exemple de réalisation représenté à la figure 9, qui est similaire à l'exemple représenté sur la figure 2, un septum 50 s'étend transversalement dans chaque cellule 28 depuis la paroi 30 de la cellule associée, le septum 50 étant interposé longitudinalement entre la peau acoustique 22 et le premier obstacle 36.

Selon un autre exemple de réalisation représenté à la figure 10, qui est similaire à l'exemple représenté sur la figure 2, chaque cellule 28 comporte un seul obstacle 36 qui présente un bord d'extrémité libre 40 transversal qui délimite un passage 42 avec la paroi 30 en vis-à-vis, pour permettre le passage des ondes sonores qui pénètrent dans la cellule 28 associée.

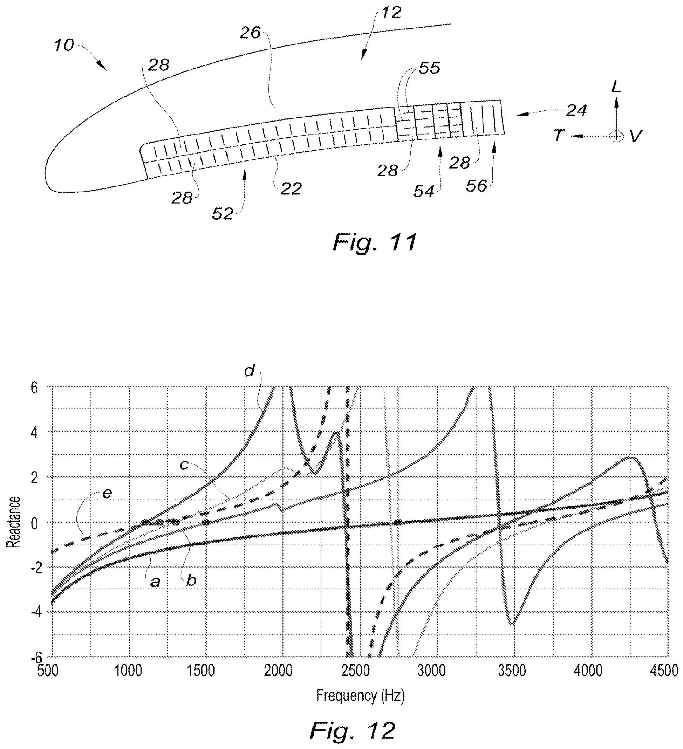

Selon un autre exemple de réalisation représenté à la figure 11, le panneau acoustique 12 combine des cellules 28 avec obstacles et des cellules 28 sans obstacles.

Plus particulièrement, le panneau 12 selon la figure 11 comporte une première portion 52 qui comprend un premier étage de cellules 28 sans obstacle et un second étage de cellules 28 sans obstacle, de façon à former un double résonateur.

Le panneau 12 comporte une deuxième portion 54 qui est accolée à la première portion 52 et qui comprend des cellules 28 équipées de quatre obstacles 55 du type décrit précédemment.

La deuxième portion 54 est adaptée pour atténuer les basses fréquences et est avantageusement agencée au voisinage d'une soufflante de la nacelle 10 par exemple.

Enfin, le panneau 12 comporte dans cet exemple une troisième portion 56 qui est accolée à la deuxième portion 54 et qui présente un étage de cellule 28 sans obstacle.

La deuxième portion 54 du panneau acoustique 12 est équivalente, en termes d'atténuation du bruit, à une portion comprenant des cellules sans obstacle présentant une hauteur supérieure, de l'ordre de deux à trois fois la hauteur de la deuxième portion 54 comprenant des cellules avec obstacles.

Un avantage de cette caractéristique est que la peau arrière 26 du panneau acoustique 12 est continue et sans perforation, donc sans dégradation de performances mécaniques, et le volume pris par le traitement acoustique n'impacte pas le volume situé à l'arrière du panneau acoustique 12.

A titre non limitatif, les cellules avec obstacles et les cellules sans obstacles peuvent être réparties en damier sur la surface du panneau acoustique 12.

On a représenté à la figure 12 un graphique illustrant la capacité d'atténuation acoustique d'un bruit selon divers types de cellules 28 au cours d'un test. Sur ce graphe, la meilleure capacité d'atténuation correspond aux fréquences pour lesquelles la réactance mesurée à partir de la signature acoustique de la configuration, par exemple à l'aide d'un tube de Kundt, est proche de la valeur 0 sur l'axe des ordonnées.

La courbe « a » illustre l'atténuation acoustique d'une cellule « classique » d'une épaisseur longitudinale de 30 millimètres, sans obstacle.

La courbe « a » croise la ligne de réactance nulle, à une abscisse d'environ 2700 Hertz, ce qui signifie que cette cellule atténue efficacement les fréquences avoisinant 2700 Hertz, dans le cas d'une onde plane d'incidence normale au traitement.

La courbe « b », qui illustre l'atténuation acoustique d'une cellule comportant un obstacle et présentant une épaisseur de 30 millimètres, atténue efficacement les fréquences avoisinant 1500 Hertz.

La courbe « c », qui illustre l'atténuation acoustique d'une cellule comportant deux obstacles et présentant une épaisseur de 30 millimètres, atténue efficacement les fréquences avoisinant 1300 Hertz.

La courbe « d », qui illustre l'atténuation acoustique d'une cellule comportant trois obstacles et présentant une épaisseur de 30 millimètres, atténue efficacement les fréquences avoisinant 1100 Hertz.

La courbe « e », qui illustre l'atténuation acoustique d'une cellule ne comportant pas d'obstacle et présentant une épaisseur de 70 millimètres, atténue efficacement les fréquences avoisinant 1150 Hertz.

Ce test permet de constater que, à hauteur de cellule équivalente, l'ajout d'obstacles permet d'atténuer des fréquences plus basses. En particulier, en ajoutant trois obstacles dans une cellule de 30 millimètres d'épaisseur, on a reproduit le comportement d'un traitement acoustique conventionnel de 70 millimètres d'épaisseur.

En d'autres termes encore, l'ajout d'obstacles partiels transversalement à la longueur d'une cellule, permet d'atténuer des fréquences basses dans une plus faible épaisseur de cellule qu'une cellule sans obstacle.

La description qui précède est donnée à titre d'exemple non limitatif.

On comprendra que le panneau acoustique 12 peut adopter des formes planes, ou de révolution.

De même, les cellules 28 peuvent adopter des sections de formes diverses.

L'invention propose plusieurs configurations et procédés de fabrication de tels panneaux acoustiques.

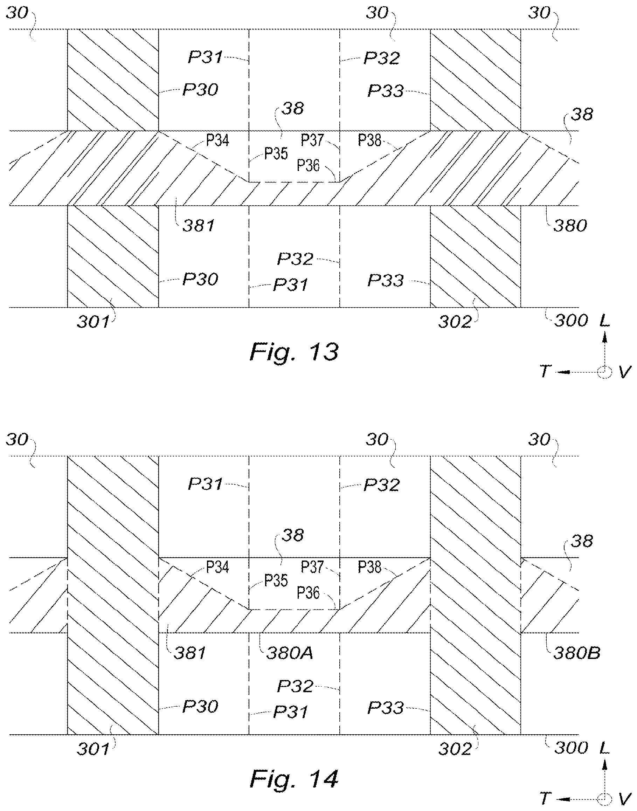

Les figure 13 à 16 illustrent des configurations d'âme alvéolaire à cellules hexagonales. Ces configurations ainsi que des procédés correspondants sont décrits ci-dessous.

Dans un procédé, illustré à la figure 13, au moins un obstacle 38 est réalisé à partir d'au moins un ruban 380.

La figure 13 montre partiellement une première plaque 300 et un ruban 380 placé sur la première plaque 300. Cette première plaque 300 ainsi que ce ruban 380 sont représentés à plat, c'est-à-dire non étirés, non déployés.

Plus spécifiquement, la figure 13 montre deux parties nodales 301 et 302 de la première plaque 300, ces parties nodales étant représentées hachurées. Les parties nodales 301 et 302 sont destinées à être fixées à des parties nodales respectives d'une deuxième plaque (non représentée). La première plaque 300 comprend aussi des parties dites non-nodales 30, représentées non hachurées à la figure 13. Ces parties non-nodales 30 sont destinées à constituer des parois de délimitation des cellules de l'âme alvéolaire (voir ci-dessous).

Dans l'exemple de la figure 13, le ruban 380 s'étend au travers desdites parties nodales 301 et 302 de la première plaque 300. Ainsi, lorsque la deuxième plaque (non représentée) sera disposée sur la première plaque 300, le ruban 380, qui sera alors situé entre la première et la deuxième plaque, s'étendra au travers des parties nodales respectives de ces deux plaques.

Le ruban 380 comprend aussi plusieurs zones fonctionnelles, en particulier une zone de fixation 381 (zone hachurée du ruban) et une zone dite libre 38 (partie non hachurée du ruban). Dans cet exemple, chaque zone libre 38 est destinée à constituer un obstacle d'une cellule respective (voir ci-dessous).

Dans le mode de réalisation de la figure 13, le procédé comprend une étape de fixation du ruban 380 à la première plaque 300. Pour ce faire, la surface du ruban 380 en vis-à-vis de la première plaque 380 est fixée - par exemple par collage, brasage ou soudage - à la première plaque 300 par la zone de fixation 381 du ruban 38, ladite zone libre 38 du ruban 380 n'étant pas fixée à la première plaque 300.

Ce procédé comprend en outre une étape de fixation de la deuxième plaque (non représentée) à la première plaque 300. Dans cet exemple, les parties nodales 301 et 302 de la première plaque 300 sont fixées - par exemple par collage, brasage ou soudage - à des parties nodales de la deuxième plaque situées en vis-à-vis des parties nodales 301 et 302 de la première plaque 300. Bien entendu, dans les régions des parties nodales 301 et 302 où s'étend le ruban 380 (régions avec double hachurage sur la figure 13), les parties nodales des deux plaques ne sont pas directement fixées les unes aux autres puisque le ruban 380 est interposé entre les deux plaques. Dans ces régions, les parties nodales des deux plaques sont fixées entre elles par l'intermédiaire du ruban 380 auquel elles sont fixées. Dans une variante, on peut prévoir des ouvertures ou orifices (non représentés) dans les régions du ruban 380 situées sur les parties nodales (régions avec double hachurage sur la figure 13), de sorte que les deux plaques puissent aussi être fixées ensemble au travers de telles ouvertures ou de tels orifices.

Après fixation du ruban 380 à la première plaque 300 et de la deuxième plaque à la première plaque 300, ce procédé comprend une étape de formage de ces différents éléments de manière à former la partie du panneau acoustique constituée par ces éléments.

Dans l'étape de formage, les parties non-nodales de la première et de la deuxième plaque sont conformées de sorte que chaque partie non-nodale 30 de la première plaque 300 constitue, avec une partie non-nodale en vis-à-vis de la deuxième plaque, ladite paroi périphérique délimitant une cellule correspondante de l'âme alvéolaire, et de sorte qu'une partie de l'au moins un ruban (partie non hachurée visée par la référence 38 à la figure 13) forme l'au moins un obstacle 38 dans cette cellule.

Pour faciliter le formage et favoriser la formation des angulations requises, la première plaque 300 peut comprendre des lignes de pli P30, P31, P32 et P33. Ces lignes de pli délimitent des faces respectives de la cellule (voir figure 13). La deuxième plaque (non représentée) peut aussi comprendre de telles lignes de plis.

De même, le ruban 380 peut comprendre des lignes de pli P34, P35, P36, P37 et P38 prévues pour faciliter le formage et favoriser la formation des angulations requises, ces lignes de pli délimitant différentes facettes de l'obstacle 38 (voir figure 13 ; et voir ci-dessous les parties centrale et latérales).

Dans cet exemple, on comprend que la paroi de chaque cellule comprendra, après mise en œuvre de l'étape de formage, six faces formant une cellule hexagonale, trois faces étant constituées par la première plaque 300 (respectivement entre les lignes de plis P30 et P31, P31 et P32, et P32 et P33), trois faces étant constituées en vis-à-vis par la deuxième plaque (non représentée).

Dans cet exemple, l'obstacle 38, c'est-à-dire la zone dite libre du ruban 380, est fixé à trois faces adjacentes de la cellule associée. Ces trois faces sont, dans l'exemple qui précède, des parties de la première plaque 300. Alternativement, ces trois faces pourraient être des parties de la deuxième plaque par fixation du ruban 380 non pas à la première plaque 300 mais à la deuxième plaque (mode de réalisation non représenté).

Bien entendu, ce qui vient d'être décrit peut s'appliquer simultanément à des parties non représentées à la figure 13 de la première plaque 300, du ruban 380 et de la deuxième plaque correspondante, la figure 13 montrant seulement une partie de ces éléments.

De même, plusieurs rubans 380 peuvent être utilisés de manière à constituer plusieurs obstacles 38 dans une même cellule.

En outre, ce procédé peut être mis en œuvre successivement en fixant sur la deuxième plaque un autre ruban puis en fixant une troisième plaque sur la deuxième plaque, et ainsi de suite.

La figure 14 illustre un autre procédé permettant d'obtenir une configuration d'âme alvéolaire similaire à celle de la figure 13. Ce procédé est décrit ci-dessous par différence avec le procédé qui vient d'être décrit.

Dans cet exemple, aucun ruban ne s'étend au travers des parties nodales 301 et 302 de la première plaque, ni par conséquent au travers des parties nodales de la deuxième plaque (non représentée).

Dans un mode d'élaboration, cette configuration est obtenue en fixant le ruban 380 dans chaque cellule du matériau alvéolaire après déploiement du matériau alvéolaire.

Dans un autre mode d'élaboration, les plaques et rubans sont fixés entre eux dans une disposition dite à plat. On fixe sur la première plaque 300 plusieurs rubans 380A/380B, entre des parties nodales de cette plaque. Par exemple, on fixe le ruban 380A entre les parties nodales 301 et 302 de la première plaque 300.

On fixe ensuite une deuxième plaque (non représentée) à la première plaque 300 par des parties nodales respectives de ces plaques. Dans ce cas, les parties nodales des deux plaques sont donc fixées les unes aux autres par l'intégralité des surfaces des parties nodales puisqu'aucun ruban ne s'étend au travers de ces parties nodales. Cela permet d'homogénéiser la fixation des plaques sur toute la hauteur des cellules (suivant la direction L) et évite toute surépaisseur entre les zones collées des deux plaques.

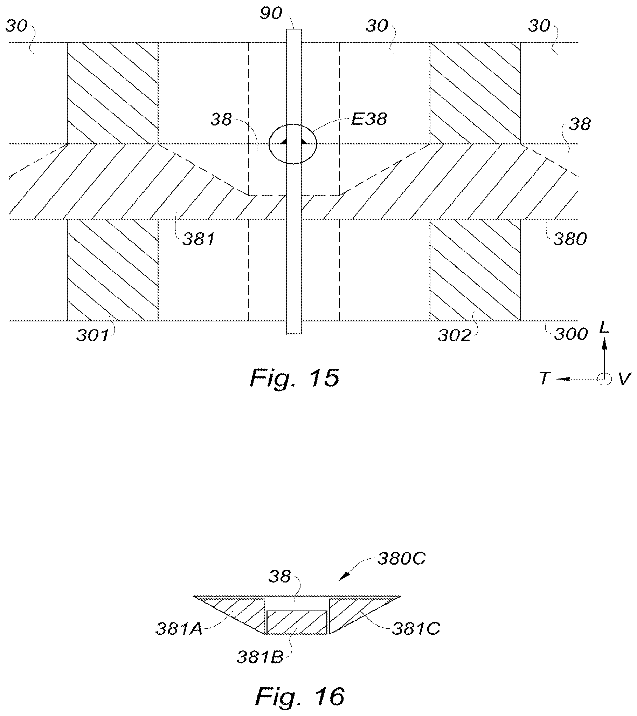

Les rubans du type décrits ci-dessus en référence à la figure 14, c'est-à-dire fixés entre des parties nodales d'une plaque, peuvent comprendre une zone de fixation 381 située dans un même plan T-L que la zone dite libre 38, c'est-à-dire que la zone de fixation 381 et la zone libre 38 peuvent être des zones d'une même surface plane (avant formage de l'obstacle), une zone prolongeant l'autre zone dans un même plan. Alternativement, en référence à la figure 16, un ruban 380C peut comprendre une ou plusieurs zones de fixation 381A/381B/381C rabattues contre la zone libre 38 de ce ruban. Le principe de fixation des rubans à une plaque est toutefois identique dans les deux cas : le ruban est fixé à une plaque par sa ou ses zones de fixation uniquement.

Dans ces différents exemples de procédé, le formage peut être réalisé en appliquant un effort de traction sur les plaques fixées l'une à l'autre (suivant la direction V), cet effort de traction tendant à écarter les plaques l'une de l'autre ou les unes des autres.

Cet effort de traction, compte tenu de l'encollage des plaques par des parties nodales et des zones de plis prévues sur les plaques, permet de conformer les plaques pour constituer les cellules de l'âme alvéolaire.

Le déploiement des parties dites libres 38 du ou des rubans 380/380A/380B peut être réalisé indépendamment, après conformation des cellules, en appliquant un effort de traction sur ces parties libres 38 (suivant la direction V) de manière à déployer les obstacles 38 dans les cellules respectives.

Dans un mode de réalisation, pour une cellule donnée, le déploiement du ou des obstacles 38 dans cette cellule peut être réalisé à l'aide d'une bandelette 90 fixée à une extrémité du ou des rubans 380 (voir figure 15) ou prolongeant le ou les rubans 380 dans une direction parallèle à la direction V. La figure 15 est basée sur l'exemple de la figure 13 : une bandelette 90 est dans cet exemple fixée à une extrémité E38 du ruban 380 avant fixation de la deuxième plaque sur la première plaque 300. Une telle bandelette 90 permet, lors de l'étape de formage, de conformer l'obstacle par traction de la bandelette 90 (suivant la direction V).

Dans les exemples des figures 13 à 15, les plis P34-P38 du ou des rubans 380/380A/380B permet de conférer, après déploiement desdites parties libres du ou des rubans, une géométrie aux obstacles 38 dans laquelle chaque obstacle comprend :
- une partie centrale, située entre les plis P35, P36 et P37, qui s'étend transversalement, de préférence globalement perpendiculairement (suivant la direction V) par rapport à l'axe principal de la cellule associée, cet axe principal s'étendant suivant la direction L longitudinale, et
- deux parties latérales, respectivement situées entre les plis P34 et P35, et entre les plis P37 et P38, qui s'étendent chacune suivant une direction oblique par rapport audit axe principal de la cellule associée.

De préférence, les zones de plis et de fixation du ou des rubans 380/380A/380B sur la première plaque 300 sont déterminées de sorte que la direction oblique de chacune des parties latérales de l'obstacle 38 soit comprise entre 30° et 60° par rapport à l'axe principal. Avantageusement, ces angles permettent que la cellule soit repliée à plat ou déployée pour former une cavité à section hexagonale (hexagone régulier ou non régulier), ou une section rectangulaire par surexpansion de l'âme alvéolaire, sans générer de traction parasite sur les parois des plaques constitutives du matériau cellulaire ni sur le ruban additionnel.

De manière générale, on préférera mettre en œuvre les procédés de fabrication selon l'invention de manière à constituer au moins deux obstacles 36/38/44 par cellule, voire trois (voir plus haut pour les avantages conférés par la multiplication du nombre d'obstacles par cellule).

Comme indiqué plus haut, on préférera que dans chaque cellule, pour deux obstacles 36/38 donnés, ces obstacles 36/38 soient décalés l'un par rapport à l'autre suivant l'axe principal, de sorte que le passage 42 délimité par le bord d'extrémité libre 40 du premier obstacle 36 et le passage 42 délimité par le bord d'extrémité libre 40 du second obstacle 38 soient décalés radialement pour former une chicane. Une telle chicane permet d'augmenter la longueur du chemin parcouru par les ondes sonores à travers la cellule 28 associée.

Pour ce faire, dans l'exemple de la figure 13, un premier ruban 380 peut être fixé à la première plaque 300 entre deux parties nodales 301/302 de cette première plaque 300 et un deuxième ruban (non représenté) peut être fixé à la deuxième plaque (non représentée) entre deux parties nodales de cette deuxième plaque en vis-à-vis, le premier et le deuxième ruban étant décalés l'un par rapport à l'autre suivant la direction L longitudinale.

De plus, le premier et le deuxième ruban peuvent être positionnés de sorte que, après déploiement, les parties latérales du premier et du deuxième ruban soient orientées dans un même sens suivant la direction L, ou de sorte que les parties latérales du premier ruban soient orientées dans un sens suivant la direction L et que les parties latérales du deuxième ruban soient orientées dans l'autre sens suivant la direction L.

Dans un exemple avec au moins deux rubans 380 fixés respectivement sur la première plaque 300 et la deuxième plaque, on peut installer une bandelette 90 fixée à l'extrémité libre 38 de chacun des rubans 380. Le déploiement de l'âme alvéolaire est réalisé par traction dans la direction V des parties non-nodales de la première plaque 300 et de la deuxième plaque, typiquement des faces centrales respectives situées entre les lignes de pli P31 et P32. Ce déploiement provoque une augmentation de distance entre les extrémités libres 38 respectives des rubans 380, et donc entre les zones de fixation E38 respectives de la bandelette 90 aux rubans. Cela met en tension la bandelette 90 et oblige les extrémités libres 38 des rubans 380 à se déployer transversalement dans la cellule. Préférentiellement, on installera les rubans 380 de manière à ce que les extrémités libres 38 soient les plus éloignées les unes des autres dans le sens de la hauteur de cellule (direction L) afin de favoriser le déploiement sans générer de traction excessive sur la bandelette.

Ce qui vient d'être décrit peut être généralisé aux cas où une cellule comprend trois obstacles, ou davantage.

Dans un autre mode de réalisation, on réalise l'étape de fixation des plaques et de formage des cellules avant fixation des rubans. Dans ce cas, lors de ces étapes, les rubans ne sont donc pas disposés sur une plaque. Une fois les cellules formées, on peut insérer et fixer dans celles-ci un ou plusieurs rubans, de préférence préformés, de manière à constituer des obstacles semblables à ceux obtenus par le procédé décrit ci-dessus en référence à la figure 14.

Dans ces différents exemples, les plaques constituant les parois des cellules acoustiques peuvent comprendre ou être réalisées dans un matériau comprenant de l'aluminium, des fibres synthétiques du type Nomex^{®}, ou du tissu fibreux renforcé ou non de matrice. Les rubans pour constituer les obstacles peuvent comprendre ou être réalisés dans un matériau comprenant de l'aluminium, un film synthétique plastique ou thermoplastique, du papier Nomex^{®} imprégné de résine ou du tissu fibreux imprégné de résine.

Les plaques et rubans sont préférentiellement assemblés par collage à l'aide de colles thermoplastiques ou thermodurcissables. Lorsque les matériaux respectifs le permettent, l'assemblage peut être réalisé par soudage ou brasage.

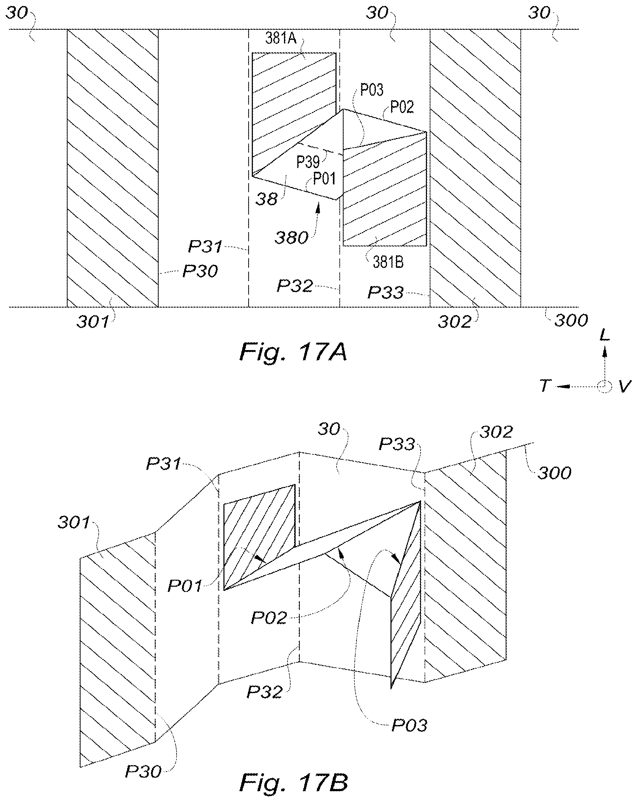

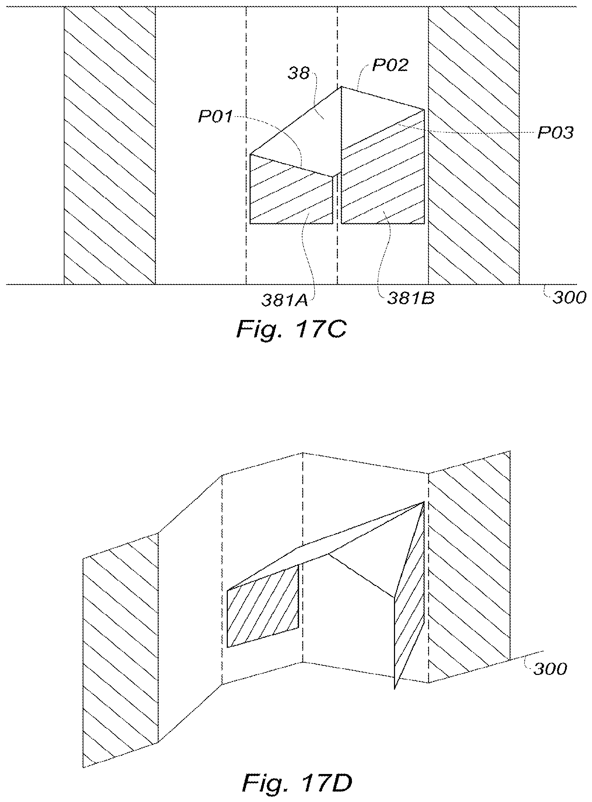

Les figures 17A et 17B d'une part, et les figures 17C et 17D d'autre part, illustrent deux autres configurations et procédés correspondants permettant de constituer un obstacle 38 à partir d'un ruban 380.

Dans ces configurations, un ruban 380 est fixé d'une part à une première plaque 300, et d'autre part à une seconde plaque.

En référence à la variante des figure 17A et 17B, le ruban 380 comporte des zones 381A et 381B de fixation du ruban 380 et une zone 38 entre les zones 381A et 381B. Dans cet exemple, la zone 38 est quadrilatérale. La zone 38 est non collée aux plaques et peut se déployer transversalement dans la cellule 28 lors du déploiement de l'âme alvéolaire par conformation des plaques. Lors du déploiement de l'âme alvéolaire par traction dans la direction V des parties non-nodales des plaques respectives, la zone 38 est limitée par une ligne de pli P01 avec la zone 381A et une ligne de pli P03 avec la zone 381B (voir figure 17A). En position à plat illustrée à la figure 17A, la zone 38 comprend deux parties séparées par la ligne de pli P02 et délimitées par les lignes de pli P01 et P03. Ces lignes de pli forment un angle d'au plus 70° avec la direction des lignes de pli P31 et P32, et préférentiellement compris entre 30° et 60° par rapport à la direction de ces lignes de pli. Un tel agencement permet de limiter ou annuler l'effort de traction exercé par la zone 38 du ruban 380 lors du déploiement de l'âme alvéolaire par écartement des plaques. La figure 17B illustre la première plaque 300 et le ruban après déploiement de l'âme alvéolaire. Comme cela ressort des figures 17A et 17B, la partie de la zone 38 située entre les lignes de pli P02 et P03 et la zone 381B sont coplanaires dans la position à plat (figure 17A) et sont situés dans des plans différents après déploiement de l'âme alvéolaire (figure 17B).

Dans la variante de la figure 17C et 17D, la zone 38 située entre les lignes P01 et P02 ainsi que la zone 381A sont coplanaires dans la position à plat.

On considère dans ce document qu'une cellule 28 hexagonale obtenue selon l'un de ces procédés comprend :
- une face centrale d'une première plaque : dans l'exemple de la figure 17A, cette face centrale est celle comprise entre les lignes de pli P31 et P32 de la première plaque 300 ;
- deux faces latérales d'une première plaque : dans l'exemple de la figure 17A, ces faces latérales sont celles comprises respectivement entre les lignes de pli P30 et P31, et entre les lignes de pli P32 et P33 de la première plaque 300 ;
- une face centrale et deux faces latérales d'une deuxième plaque (non représentée), en vis-à-vis.

Ainsi, chaque face latérale d'une plaque est située entre une partie nodale de cette plaque et une face centrale de cette plaque, et chaque face centrale d'une plaque est située entre deux faces latérales de cette plaque.

Dans une configuration, le ruban 380 peut former un Z (voir figures 17A et 17B) ou un V (figures 17C et 17D).

Selon cette configuration décrite en référence aux figures 17A à 17D, on fixe une première patte de fixation 381A du ruban 380 sur une portion de la première plaque 300 située entre deux lignes de pli. Dans cet exemple, la première patte de fixation 381A est fixée entre les lignes P31 et P32, c'est-à-dire sur la face centrale de la première plaque 300.

Le ruban 380 est replié suivant la ligne de pli P01 et la ligne de pli P02 de sorte qu'une deuxième patte de fixation 381B soit située en vis-à-vis d'une face latérale de la deuxième plaque (non représentée) déposée sur cet ensemble avant fixation de ces deux plaques l'une à l'autre par leurs parties nodales respectives.

Dans l'exemple des figures 17A et 17B, la première patte 381A s'étend en direction d'une première extrémité de la cellule associée (vers le haut de la figure 17A) et la deuxième patte 381B s'étend en direction d'une deuxième extrémité de cette cellule (vers le bas de la figure 17A). Dans l'exemple des figures 17C et 17D, la première patte 381A et la deuxième patte 381B s'étendent dans la même direction.

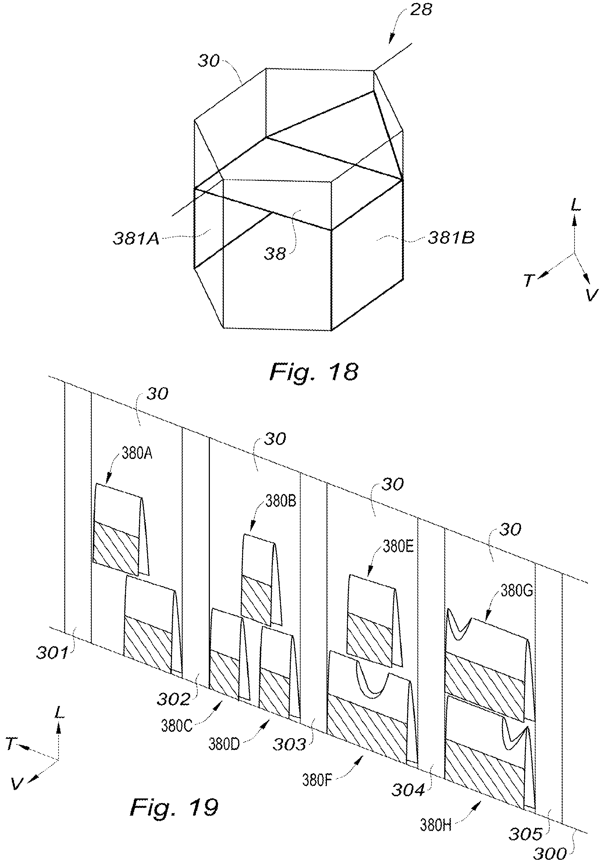

Dans un autre exemple représenté à la figure 18, la première patte 381A et la deuxième patte 381B peuvent s'étendre en direction d'une même extrémité de la cellule 28 associée, et être liées à une ou plusieurs parties non nodales de la première plaque 300 et de la deuxième plaque formant les cellules.

Le ruban 380 comprend aussi une surface libre 38 située entre les deux pattes de fixation 381A et 381B.

Dans l'exemple des figures 17A et 17B, le ruban 380 est replié sur lui-même de sorte qu'une partie de la surface libre 38 est superposée à la patte de fixation 381A et une autre partie de la surface libre 38 est superposée à la patte de fixation 381B.

La figure 17B illustre le déploiement de la cellule montrant le pliage de la plaque 300 suivant les lignes de pli P30, P31, P32 et P33, et le déploiement de la surface libre 38 entre les plis P01 et P03. Comme indiqué plus haut, le dépliage du ruban 380 au niveau de la ligne de pli P02 est réalisé à mesure que la plaque 300 est pliée et que la deuxième plaque (non représentée) sur laquelle est fixée la partie 381B est éloignée de la première plaque 300.

On comprend avec la description qui précède que l'étape de formage, réalisée par application d'un effort de traction sur les plaques fixées l'une à l'autre (voir plus haut) permet de conformer simultanément les plaques pour constituer les cellules de l'âme alvéolaire et le ruban 380 dont la partie libre 38 va constituer un obstacle dans cette cellule.

L'obstacle 38 ainsi constitué est donc fixé dans cet exemple à deux faces non adjacentes, et non nodales, de la cellule 28 associée. Dans l'exemple de la figure 17A et 17B, il est respectivement fixé à une face centrale de la première plaque et à une face latérale de la deuxième plaque. D'autres combinaisons sont possibles. Par exemple, l'obstacle peut être fixé à une face latérale de la première plaque et une face latérale de la deuxième plaque, ces faces latérales étant de préférence sensiblement parallèles l'une par rapport à l'autre ; ou encore, l'obstacle peut être fixé à la face centrale de la première plaque et à la face centrale de la deuxième plaque d'une cellule donnée.

Des combinaisons sont possibles. On peut ainsi fixer plusieurs rubans dans une même cellule et/ou dans plusieurs cellules simultanément fabriquées à partir de deux plaques comme décrit plus haut.

Lorsqu'une cellule comprend plusieurs rubans, les parties de fixation de ces rubans peuvent être fixées à des faces latérales ou centrales et selon des orientations propres à constituer des chicanes capables d'atténuer des fréquences choisies.

Selon une variante de fabrication, des rubans 380 du type décrit ci-dessus en référence à la figure 17A et 17B peuvent être fixés aux plaques après formage des cellules, par insertion des rubans dans les cellules puis fixation de ceux-ci par exemple par collage, brasage ou soudage.

L'obstacle 38, c'est-à-dire la partie centrale d'un ruban 380 fixé conformément à la figure 17A et 17B, est agencé pour s'étendre transversalement. Par exemple, l'obstacle 38 peut être agencé pour s'étendre transversalement, globalement perpendiculairement, par rapport à l'axe principal de la cellule associée, c'est-à-dire de manière sensiblement parallèle au plan T-V. Alternativement, cet obstacle 38 (partie centrale du ruban 380) peut s'étendre transversalement en présentant une inclinaison par rapport à un tel plan et/ou avoir une surface non plane. A cet effet, la partie centrale peut comprendre une ou plusieurs lignes de pli P39 pour faciliter le formage de l'obstacle 38 et favoriser la formation de la ou des éventuelles angulations requises.

De plus, lorsqu'une arête de la partie centrale du ruban 380 s'étend le long d'une face, par exemple la face latérale de la première plaque 300 située entre les lignes de pli P32 et P33 (figure 17A), cette arête de la partie centrale du ruban 380 peut être fixée - par exemple par collage, soudage ou brasage - à ladite face, de préférence après formage de l'ensemble.

Dans un mode de réalisation non représenté, un tel ruban 380 peut comprendre une troisième partie de fixation qui s'étend depuis ladite arête de manière à renforcer le maintien du ruban 380. Dans cet exemple, cette troisième partie de fixation du ruban 380 (non représentée) serait fixée à la face latérale de la première plaque 300 située entre les lignes de pli P32 et P33 (figure 17A).

Dans un mode de réalisation non représenté, au moins une portion de la partie centrale 38 du ruban 380 peut avoir une largeur supérieure à la largeur des parties de fixation 381A/381B et/ou à la largeur d'une face de la cellule, par exemple la distance séparant la ligne de pli P31 de la ligne de pli P32. Cela permet d'augmenter la surface de l'obstacle 38 selon une projection longitudinale.

La figure 19 montre partiellement une première plaque 300 comprenant plusieurs parties nodales 301-305 entre lesquelles sont fixés, à plat, plusieurs rubans 380A-380H dont les premières et deuxièmes pattes s'étendent dans un même sens suivant la direction L.

Au moins deux rubans sont disposés entre chaque paire de parties nodales adjacentes de manière à constituer une chicane après fixation de la deuxième plaque (non représentée) et formage de l'ensemble.

Par exemple, la partie non-nodale 30 située entre les parties nodales 302 et 303 comprend trois rubans 380B, 380C et 380D. Le ruban 380B est agencé de manière à constituer un obstacle au centre de la cellule et les rubans 380C et 380D sont agencés pour constituer des obstacles latéraux. Un tel agencement constitue une chicane permettant d'empêcher les ondes sonores de dessiner une trajectoire directe depuis l'extrémité avant jusqu'à l'extrémité arrière de la cellule associée.

Pour autre exemple, la partie non-nodale 30 située entre les parties nodales 303 et 304 comprend deux rubans 380E et 380F. Le ruban 380E est agencé de manière à constituer un obstacle au centre de la cellule et le ruban 380F pour constituer un obstacle latéral : pour ce faire, la partie centrale de ce ruban 380F s'étend sur toute la largeur de la partie non-nodale 30 et comprend une ouverture ou découpe en son centre. Un tel agencement constitue une chicane permettant d'empêcher les ondes sonores de dessiner une trajectoire directe depuis l'extrémité avant jusqu'à l'extrémité arrière de la cellule associée.

La figure 19 montre différentes configurations de rubans constituant une telle chicane, avec ou sans ouverture ou découpe en partie centrale de ruban.

Les principes illustrés en référence à la figure 18 ou 19 peut bien entendu être mis en œuvre pour constituer des cellules d'autre forme, par exemple de section quadrilatérale ou autre.

Les variantes illustrées en référence aux figures 14 et 17 à 19 peuvent être réalisées en collant les rubans avec les plaques dans une configuration à plat ou en insérant les rubans dans les cellules déployées et en les fixant aux zones ad hoc des plaques.

Dans ces différents exemples, les pattes de fixation des rubans peuvent prendre toute forme permettant la fixation du ruban aux plaques et permettant la formation de lignes de pliure aptes à constituer le ou les obstacles correspondants.

Dans une variante de réalisation, on peut découper une plaque de manière à y définir des ouvertures puis plier et coller la plaque ainsi découpée de sorte que cette plaque forme lesdites parois périphériques des cellules et ledit au moins un obstacle.

La plaque ainsi découpée et pliée peut être collée sur elle-même et/ou sur une ou plusieurs autres plaques.

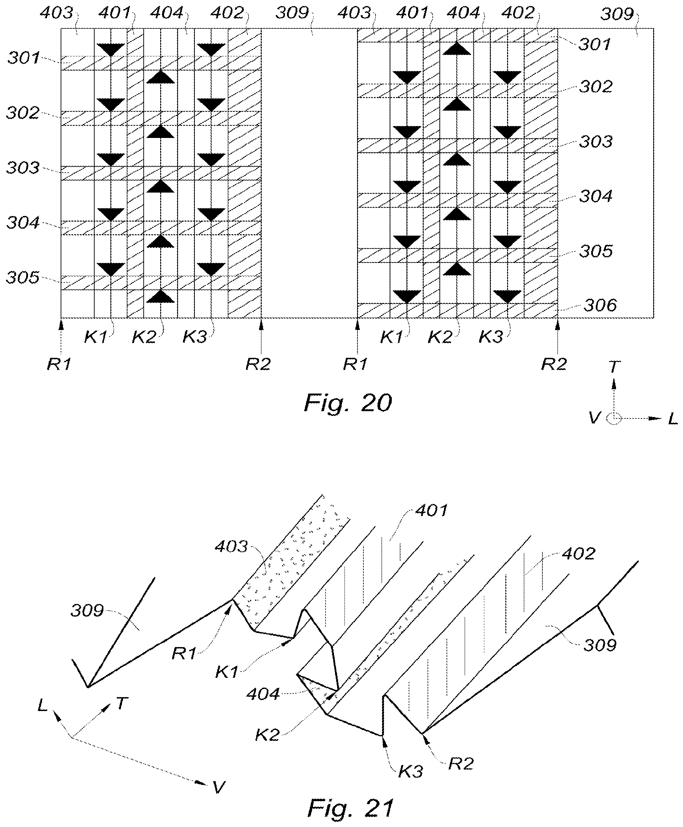

Un exemple d'une telle variante est représenté à différentes étapes d'élaboration par les figures 20, 21 et 22.

La figure 20 montre une partie d'une plaque 300 à plat. Cette plaque 300 comporte des zones transversales 401-404, s'étendant suivant la direction T, qui constituent des parties nodales destinées à être collées à une partie 309 de la plaque 300. Dans cet exemple, les parties nodales 401 et 402 (bandes verticales hachurées) situées à droite de la figure 20 sont destinées à être collées par leur face avant sur la face avant de la partie 309 située à droite de la figure 20 ; les parties nodales 403 et 404 situées à droite de la figure 20 sont destinées à être collées par leur face arrière sur la face arrière de la partie 309 située à gauche de la figure 20.

La figure 21 montre une partie de la plaque 300 de la figure 20 pliée de manière à montrer l'orientation que prennent les parties nodales et non-nodales verticales lors du pliage réalisé en vue du collage des parties nodales 401 et 402 à une partie 309 (située sur la droite de la figure 21) et 403 et 404 à une autre partie 309 (située sur la gauche de la figure 21).

La plaque 300 de la figure 20 comprend aussi des zones longitudinales 301-306 qui constituent des parties nodales destinées à être collées sur elles-mêmes et à deux parties 309 adjacentes de la plaque 300.

Chaque partie délimitée par deux parties nodales 403 et 401, ou 401 et 404, ou 404 et 402, sont destinées à être repliées suivant une ligne de pli K1, ou K2 ou K3 respectivement, et à être collée, le long des zones longitudinales 301-306, à une autre partie verticale adjacente, cette autre partie verticale étant elle aussi délimitée par deux parties nodales 403 et 401, ou 401 et 404, ou 404 et 402, respectivement.

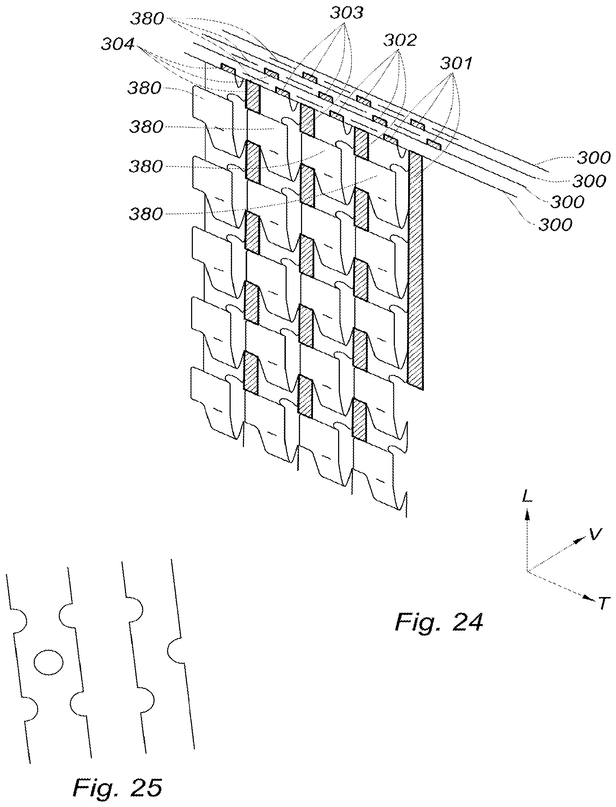

La plaque 300 comprend aussi des ouvertures réalisées entre deux parties nodales longitudinales 301-306 et entre deux parties nodales transversales 401-404. Dans l'exemple de la figure 20, ces ouvertures sont triangulaires et s'étendent de part et d'autre des lignes de pli K1, K2 et K3. Dans cet exemple, les ouvertures situées entre deux parties nodales longitudinales respectives sont décalées suivant la direction T d'une ouverture à une autre ouverture adjacente : ainsi, par exemple, en considérant trois ouvertures situées entre deux parties nodales longitudinales respectives (par exemple entre les parties 304 et 305 à gauche sur la figure 20), une première ouverture est située à proximité de l'une de ces parties nodales longitudinales (par exemple la partie 305), une deuxième ouverture adjacente à la première ouverture est située à proximité de l'autre de ces parties nodales longitudinales (la partie 304), et une troisième ouverture adjacente à la deuxième ouverture est située à proximité de la partie nodale longitudinale à proximité de laquelle est aussi située la première ouverture (partie 305). Cette disposition et cette forme d'ouverture ne sont pas limitatives, d'autres modes de réalisation étant par exemple illustrés sur les figures 24 et 25.

Après collage des différentes parties nodales de la plaque 300 avec une partie 309 correspondante (cf. ci-avant), la plaque 300 forme une âme alvéolaire comprenant des cellules qui s'étendent suivant la direction L (horizontalement sur la figure 20). Par exemple, après pliage et collage, une cellule s'étend entre le repère R1 et le repère R2 à gauche de la figure 20, délimitant deux zones 309 adjacentes.

La figure 20 montre deux séries de parties verticales chacune étant comprise entre un repère R1 et un repère R2. Une partie de la plaque 300 située entre un repère R1 et un repère R2 est destinée à constituer une cellule de l'âme alvéolaire (cf. ci-dessous). Dans cet exemple, d'une cellule à l'autre, c'est-à-dire d'une série de parties transversales comprenant des replis K1, K2... à une autre série adjacente de parties transversales, les parties longitudinales sont décalées transversalement (voir figure 20). Ce décalage transversal permet, en tirant sur les extrémités des parties 309 suivant la direction V après pliage des parties non nodales entre R1 et R2 et collage des parties nodales 401-404 et 301-306 aux parties de plaques adjacentes 309, de déployer les cellules entre les repères R1 et R2, ayant pour conséquence de former des cellules entre deux parties nodales 301-306, et déployant les parties non-nodales verticales (situées entre les parties nodales 403 et 401, ou 401 et 404, ou 404 et 402).

La longueur entre deux parties nodales transversales successives (403 et 401 ou 401 et 404 ou 404 et 402) doit être suffisante pour que, après pliages selon K1, K2 K3, après collage des parties nodales 401, 402, 403, 404 avec les parties adjacentes 309 et après collage des parties nodales 301-306 sur elles-mêmes et sur les parties 309 adjacentes, puis déploiement des cellules alvéolaires en tirant selon la direction V sur deux parties 309 au moins, les plis K1 se déploient et la longueur de plaque comprise entre deux parties nodales transversales est au moins supérieur à la largeur de cellule après déploiement.

Dans un exemple de réalisation, la distance entre deux zones nodales 301 et 302 étant de trois, la distance entre deux zones nodales transversales 403-401 adjacentes sera au moins de deux; ainsi en tirant au maximum selon la direction V sur des parties 309 pour déployer au maximum les cellules hexagonales, celles-ci peuvent prendre une forme rectangulaire de dimension deux selon la direction V et un selon la direction T (cellule rectangulaire) et le pli K1 disparait totalement au milieu de la cellule.

Préférentiellement, on adaptera les largeurs (suivant la direction L) des parties nodales transversales 401 à 404 de façon à ce que, lorsque les parties entre deux zones de plaques 309 sont repliées (suivant K1, K2, K3), il y ait au maximum trois épaisseurs de plaques 300 entre deux parties 309.

On voit que l'organisation en quinconce des ouvertures triangulaires permet de former des chicanes qui augmentent la longueur du chemin parcouru par des ondes sonores qui traverserait les cellules ainsi formées.

Les ouvertures peuvent avoir toute autre forme et être organisée autrement, pourvu que la plaque 300 ainsi découpée, pliée et collée constitue des obstacles et des chicanes permettant d'augmenter la longueur du chemin d'ondes.

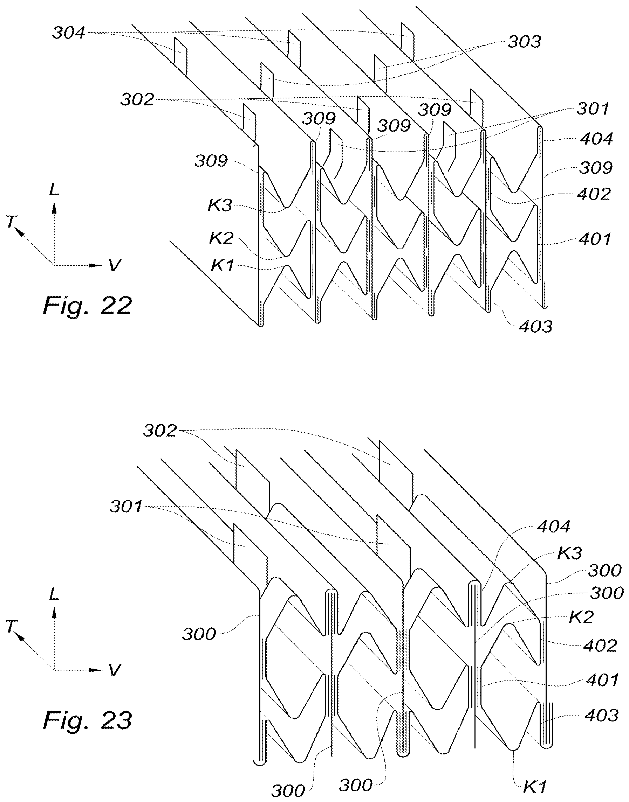

Dans un mode de réalisation, la plaque 300 est pliée, collée et formée pour réaliser successivement les parties 309 et les parties transversales (401-404, et parties situées entre les parties 403 et 401, 401 et 404, et 404 et 402). La figure 22 montre la plaque 300 de la figure 20 ainsi pliée, collée et formée : les parties nodales 301-306 sont représentées par des tirets de manière à indiquer leur localisation spatiale.

Dans un autre mode de réalisation illustré à la figure 23, on utilise plusieurs plaques 300 placées parallèlement suivant la direction V et qui s'étendent dans le plan V-T. La dimension des plaques 300 suivant la direction L définie une épaisseur de l'âme alvéolaire. La formation des cloisons internes et des cellules est réalisée par au moins une plaque additionnelle qui est découpée, pliée et encollée tel qu'illustré à la figure 23. Par exemple, en partant du coin inférieur droit de cette figure, une partie 403 de cette plaque additionnelle est collée à une première plaque 300 située à droite de la figure, une partie adjacente est repliée suivant une ligne de pli K1, une partie adjacente 401 est collée à une deuxième plaque 300 (la deuxième en partant de la droite de la figure), une partie adjacente est repliée suivant une ligne de pli K2, une partie adjacente 402 est collée à la première plaque 300, une partie adjacente est repliée suivant une ligne de pli K3, une partie adjacente 404 est collée à la deuxième plaque 300 et est conformée autour d'une arête de la deuxième plaque 300 pour y être agencée entre la deuxième plaque 300 et une troisième plaque adjacente de la même manière qu'entre la première et la deuxième plaque 300, et ainsi de suite. Chaque cellule entre deux plaques 300 étant limitée par des parties nodales longitudinales 301-306 dans le sens de la hauteur L des cellules et disposées selon des positions successives dans la direction T.

Dans une variante illustrée à la figure 24, les plaques additionnelles sont sous forme de rubans continus pliés et fixés entre deux zones nodales 301-305 adjacentes.

La figure 25 montre deux exemples de rubans continus dotés de découpes propres à constituer de telles plaques additionnelles.

Bien entendu, l'invention n'est pas limitée aux exemples qui viennent d'être décrits et de nombreux aménagements peuvent être apportés à ces exemples sans sortir du cadre de l'invention. Par exemple :
- Dans un mode de réalisation du type illustré aux figures 17A à 17D, le ruban 380 peut comprendre une patte additionnelle (non représentée) permettant de renforcer la tenue structurale de la zone 38 ; cette patte additionnelle peut être fixée sur la face centrale de la première plaque 300, en vis-à-vis de la patte 381A.
- Dans un mode de réalisation du type illustré aux figures 17A à 17D, la zone 38 peut comprendre des bords libres, c'est-à-dire les bords non délimités par les lignes de pli P01, P02 ou P03, qui ne sont pas droits, par exemple de forme incurvée, concave ou convexe.
- Dans un mode de réalisation du type illustré aux figures 20 à 24, les ouvertures de passage des ondes acoustiques dans les cellules peuvent être arrondies ou rectangulaires ou de toute autre forme.
- Dans un mode de réalisation du type illustré aux figures 20 à 24, on peut prévoir dans la plaque 300 des ouvertures ou orifices (non représentés) dans des régions situées sur les parties nodales longitudinales 301-306, de manière à assurer une liaison directe entre deux parties 309 de plaque, ou le cas échéant entre deux plaques.
- Dans un mode de réalisation mettant en œuvre un procédé de fabrication à plat, on peut prévoir des rubans ou éléments additionnels temporaires ayant une épaisseur identique aux rubans ou parties de plaques constituant un obstacle 38, pour favoriser le parallélisme des plaques ou parties de plaque 300 lors du collage.

## Revendications

1. Panneau acoustique (12) à résonateurs pour nacelle (10) d'ensemble propulsif d'aéronef, comportant une pluralité de cellules (28) acoustiques accolées qui forment une âme alvéolaire (24), chaque cellule (28) étant délimitée par une paroi (30) périphérique, et chaque cellule (28) s'étendant suivant un axe principal longitudinal correspondant à un axe de propagation des ondes sonores, depuis une extrémité avant (32) jusqu'à une extrémité arrière (34), au moins une cellule (28) comportant un premier obstacle (36) et un second obstacle (38) qui s'étendent transversalement par rapport à l'axe principal de la cellule (28) associée, depuis la paroi (30) de ladite cellule (28), les obstacles (36, 38) présentant un bord d'extrémité libre (40) qui délimite un passage (42) avec une partie de la paroi (30) en vis-à-vis pour augmenter la longueur du chemin parcouru par les ondes sonores à travers la cellule (28),
le premier obstacle (36) et le second obstacle (38) étant décalés suivant l'axe principal, le passage (42) délimité par le bord d'extrémité libre (40) du premier obstacle (36) et le passage (42) délimité par le bord d'extrémité libre (40) du second obstacle (38) étant décalés radialement pour former une chicane prévue pour augmenter la longueur du chemin parcouru par les ondes sonores à travers la cellule (28) associée,
**caractérisé en ce qu'**au moins un obstacle (36, 38) comprend une partie centrale qui s'étend transversalement par rapport à l'axe principal de la cellule (28) associée et deux parties latérales qui s'étendent chacune suivant une direction oblique par rapport audit axe principal de la cellule (28) associée, chaque direction oblique étant comprise entre 30° et 60° par rapport à l'axe principal.

2. Panneau acoustique (12) selon la revendication 1, dans lequel une partie de l'extrémité libre du premier obstacle (36) et une partie de l'extrémité libre du second obstacle (38) sont superposées suivant l'axe principal de la cellule (28) associée, pour empêcher les ondes sonores de dessiner une trajectoire directe depuis l'extrémité avant (32) jusqu'à l'extrémité arrière (34) de la cellule (28) associée.

3. Panneau acoustique (12) selon l'une quelconque des revendications précédentes, dans lequel l'au moins une cellule (28) comporte au moins un septum (46) acoustiquement perméable qui s'étend en travers de la cellule (28) associée.

4. Panneau acoustique (12) selon la revendication 3, dans lequel le septum (46) s'étend depuis le bord d'extrémité libre (40) d'au moins un obstacle (36, 38), jusqu'à la paroi (30) de la cellule (28) associée.

5. Panneau acoustique (12) selon les revendications 1 et 3, dans lequel le septum (46) s'étend depuis le bord d'extrémité libre (40) du premier obstacle (36), jusqu'au bord d'extrémité libre (40) du second obstacle (38).

6. Panneau acoustique (12) selon l'une quelconque des revendications 1 à 5, dans lequel, pour chaque cellule (28), la paroi (30) périphérique comprend six faces formant une cellule (28) hexagonale, au moins un obstacle (36, 38) étant fixé à au moins deux faces adjacentes de la cellule (28) associée.

7. Panneau acoustique (12) selon l'une quelconque des revendications 1 à 5, dans lequel, pour chaque cellule (28), la paroi (30) périphérique comprend six faces formant une cellule (28) hexagonale, au moins un obstacle (36, 38) étant fixé à au moins deux faces non adjacentes de la cellule (28) associée.

8. Nacelle (10) d'ensemble propulsif d'aéronef, **caractérisée en ce qu'**elle comprend au moins un panneau acoustique (12) selon l'une quelconque des revendications 1 à 7.

9. Procédé de fabrication d'un panneau acoustique (12) selon l'une quelconque des revendications 1 à 7, dans lequel chaque obstacle (36, 38) est réalisé à partir d'au moins un ruban, **caractérisé en ce qu'**il comprend :
- une étape de fixation dans laquelle l'au moins un ruban est fixé à une première plaque, et dans laquelle une deuxième plaque est fixée à la première plaque par des parties nodales respectives,
- une étape de formage dans laquelle des parties non-nodales de la première et de la deuxième plaque sont conformées de sorte que chaque partie non-nodale de la première plaque constitue, avec une partie non-nodale respective de la deuxième plaque, ladite paroi périphérique délimitant une cellule correspondante de l'âme alvéolaire, et de sorte qu'une partie de l'au moins un ruban forme l'obstacle (36, 38) correspondant dans cette cellule.

10. Procédé selon la revendication 9, dans lequel, lors de l'étape de fixation, l'au moins un ruban s'étend au travers desdites parties nodales de la première et de la deuxième plaque.

11. Procédé selon la revendication 9 ou 10, dans lequel une bandelette est fixée à une extrémité de l'au moins un ruban lors de l'étape de fixation et dans lequel, lors de l'étape de formage, ladite partie de l'au moins un ruban formant l'obstacle (36, 38) correspondant est conformée par traction de la bandelette.

12. Procédé selon l'une quelconque des revendications 9 à 11 pour fabriquer un panneau acoustique (12) selon la revendication 7, dans lequel l'obstacle (36, 38) correspondant est fixé à trois faces adjacentes de la cellule (28) associée, ces trois faces adjacentes étant des parties de la première plaque ou de la deuxième plaque.

13. Procédé de fabrication d'un panneau acoustique (12) selon l'une quelconque des revendications 1 à 7, le panneau acoustique (12) comprenant une première plaque et une deuxième plaque fixées ensemble par des parties nodales, des parties non-nodales de la première et de la deuxième plaque formant des parois délimitant des cellules (28) de l'âme alvéolaire (24), ce procédé étant **caractérisé en ce qu'**il comprend une étape de fixation des obstacles (36, 38) à une partie non-nodale respective de la première et de la deuxième plaque.

14. Procédé selon l'une quelconque des revendications 9 à 13, dans lequel une première patte de fixation de l'obstacle (36, 38) correspondant est fixée à une partie non-nodale de la première plaque, la première patte s'étendant en direction d'une première extrémité (32) de la cellule associée, et dans lequel une deuxième patte de fixation de l'obstacle (36, 38) correspondant est fixée à une partie non-nodale de la deuxième plaque, la deuxième patte s'étendant en direction d'une deuxième extrémité (34) de la cellule associée.

15. Procédé selon l'une quelconque des revendications 9 à 13, dans lequel une première patte de fixation de l'obstacle (36, 38) correspondant est fixée à une partie non-nodale de la première plaque, la première patte s'étendant en direction de l'une des extrémités (32) de la cellule associée, et dans lequel une deuxième patte de fixation de l'obstacle (36, 38) correspondant est fixée à une partie non-nodale de la deuxième plaque, la deuxième patte s'étendant en direction de la même extrémité (34) de la cellule associée.

## Patentansprüche

1. Akustikplatte (12) mit Resonatoren für das Maschinenhaus (10) der Antriebseinheit eines Flugzeugs, umfassend eine Vielzahl von aneinandergereihten akustischen Zellen (28), die einen Wabenkern (24) bilden, wobei jede Zelle (28) durch eine periphere Wand (30) begrenzt ist und jede Zelle (28) sich entlang einer Längshauptachse, die einer Ausbreitungsachse der Schallwellen entspricht, von einem vorderen Ende (32) bis zu einem hinteren Ende (34) erstreckt, wobei mindestens eine Zelle (28) ein erstes Hindernis (36) und ein zweites Hindernis (38) umfasst, die sich von der Wand (30) der Zelle (28) aus quer zur Hauptachse der zugehörigen Zelle (28) erstrecken, wobei die Hindernisse (36, 38) eine freie Endkante (40) aufweisen, die einen Durchgang (42) mit einem gegenüberliegenden Abschnitt der Wand (30) begrenzt, um die Länge des Wegs zu erhöhen, den die Schallwellen durch die Zelle (28) zurücklegen,
wobei das erste Hindernis (36) und das zweite Hindernis (38) entlang der Hauptachse versetzt sind, wobei der durch die freie Endkante (40) des ersten Hindernisses (36) begrenzte Durchgang (42) und der durch die freie Endkante (40) des zweiten Hindernisses (38) begrenzte Durchgang (42) radial versetzt sind, um eine Ablenkplatte zu bilden, die dazu vorgesehen ist, die Länge des Wegs zu erhöhen, den die Schallwellen durch die zugehörige Zelle (28) zurücklegen,
**dadurch gekennzeichnet, dass** mindestens ein Hindernis (36, 38) einen Mittelabschnitt, der sich quer zur Hauptachse der zugehörigen Zelle (28) erstreckt, und zwei Seitenabschnitte umfasst, die sich jeweils in einer schrägen Richtung zur Hauptachse der zugehörigen Zelle (28) erstrecken, wobei jede schräge Richtung zwischen 30° und 60° zur Hauptachse liegt.

2. Akustikplatte (12) nach Anspruch 1, wobei ein Abschnitt des freien Endes des ersten Hindernisses (36) und ein Abschnitt des freien Endes des zweiten Hindernisses (38) entlang der Hauptachse der zugehörigen Zelle (28) überlagert sind, um zu verhindern, dass die Schallwellen einen direkten Pfad vom vorderen Ende (32) zum hinteren Ende (34) der zugehörigen Zelle (28) einnehmen.

3. Akustikplatte (12) nach einem der vorhergehenden Ansprüche, wobei die mindestens eine Zelle (28) mindestens ein akustisch durchlässiges Septum (46) aufweist, das sich quer über die zugehörige Zelle (28) erstreckt.

4. Akustikplatte (12) nach Anspruch 3, wobei sich das Septum (46) von der freien Endkante (40) mindestens eines Hindernisses (36, 38) bis zur Wand (30) der zugehörigen Zelle (28) erstreckt.

5. Akustikplatte (12) nach Anspruch 1 und 3, wobei sich das Septum (46) von der freien Endkante (40) des ersten Hindernisses (36) bis zur freien Endkante (40) des zweiten Hindernisses (38) erstreckt.

6. Akustikplatte (12) nach einem der Ansprüche 1 bis 5, wobei bei jeder Zelle (28) die periphere Wand (30) sechs Flächen umfasst, die eine sechseckige Zelle (28) bilden, wobei mindestens ein Hindernis (36, 38) an mindestens zwei benachbarten Flächen der zugehörigen Zelle (28) befestigt ist.

7. Akustikplatte (12) nach einem der Ansprüche 1 bis 5, wobei bei jeder Zelle (28) die periphere Wand (30) sechs Flächen umfasst, die eine sechseckige Zelle (28) bilden, wobei mindestens ein Hindernis (36, 38) an mindestens zwei nicht benachbarten Flächen der zugehörigen Zelle (28) befestigt ist.

8. Maschinenhaus (10) der Antriebseinheit eines Flugzeugs, **dadurch gekennzeichnet, dass** es mindestens eine Akustikplatte (12) nach einem der Ansprüche 1 bis 7 umfasst.

9. Verfahren zum Herstellen einer Akustikplatte (12) nach einem der Ansprüche 1 bis 7, wobei jedes Hindernis (36, 38) aus mindestens einem Band hergestellt ist, **dadurch gekennzeichnet, dass** es Folgendes umfasst:
- einen Befestigungsschritt, bei dem das mindestens eine Band an einer ersten Platte befestigt wird, und bei dem eine zweite Platte durch jeweilige Knotenabschnitte an der ersten Platte befestigt wird,
- einen Bildungsschritt, bei dem Nicht-Knotenabschnitte der ersten und der zweiten Platte so ausgebildet werden, dass jeder Nicht-Knotenabschnitt der ersten Platte mit einem jeweiligen Nicht-Knotenabschnitt der zweiten Platte die periphere Wand bildet, die eine entsprechende Zelle des Wabenkerns begrenzt, und so, dass ein Abschnitt des mindestens einen Bandes das entsprechende Hindernis (36, 38) in dieser Zelle bildet.

10. Verfahren nach Anspruch 9, wobei sich beim Befestigungsschritt das mindestens eine Band durch die Knotenabschnitte der ersten und der zweiten Platte erstreckt.

11. Verfahren nach Anspruch 9 oder 10, wobei während des Befestigungsschritts ein Streifen an einem Ende des mindestens einen Bands befestigt wird, wobei während des Bildungsschritts der Abschnitt des mindestens einen Bands, der das entsprechende Hindernis (36, 38) bildet, durch Ziehen des Streifens gebildet wird.

12. Verfahren nach einem der Ansprüche 9 bis 11 zum Herstellen einer Akustikplatte (12) nach Anspruch 7, wobei das entsprechende Hindernis (36, 38) an drei benachbarten Flächen der zugehörigen Zelle (28) befestigt ist, wobei diese drei benachbarten Flächen Abschnitte der ersten Platte oder der zweiten Platte sind.

13. Verfahren zum Herstellen einer Akustikplatte (12) nach einem der Ansprüche 1 bis 7, wobei die Akustikplatte (12) eine erste Platte und eine zweite Platte umfasst, die durch Knotenabschnitte aneinander befestigt sind, wobei Nicht-Knotenabschnitte der ersten und der zweiten Platte Wände bilden, die Zellen (28) des Wabenkerns (24) begrenzen, wobei dieses Verfahren **dadurch gekennzeichnet ist, dass** es einen Schritt des Befestigens der Hindernisse (36, 38) an einem jeweiligen Nicht-Knotenabschnitt der ersten und der zweiten Platte umfasst.

14. Verfahren nach einem der Ansprüche 9 bis 13, wobei eine erste Befestigungslasche des entsprechenden Hindernisses (36, 38) an einem Nicht-Knotenabschnitt der ersten Platte befestigt ist, wobei sich die erste Lasche in Richtung eines ersten Endes (32) der zugehörigen Zelle erstreckt, und wobei eine zweite Befestigungslasche des entsprechenden Hindernisses (36, 38) an einem Nicht-Knotenabschnitt der zweiten Platte befestigt ist, wobei sich die zweite Lasche in Richtung eines zweiten Endes (34) der zugehörigen Zelle erstreckt.

15. Verfahren nach einem der Ansprüche 9 bis 13, wobei eine erste Befestigungslasche des entsprechenden Hindernisses (36, 38) an einem Nicht-Knotenabschnitt der ersten Platte befestigt ist, wobei sich die erste Lasche in Richtung eines der Enden (32) der zugehörigen Zelle erstreckt, und wobei eine zweite Befestigungslasche des entsprechenden Hindernisses (36, 38) an einem Nicht-Knotenabschnitt der zweiten Platte befestigt ist, wobei sich die zweite Lasche in Richtung desselben Endes (34) der zugehörigen Zelle erstreckt.

## Claims

1. An acoustic panel (12) with resonators for a nacelle (10) of an aircraft propulsion unit, including a plurality of adjoining acoustic cells (28) which form a cellular core (24), each cell (28) being delimited by a peripheral wall (30), and each cell (28) extending along a longitudinal main axis corresponding to an axis of propagation of the sound waves, from a front end (32) up to a rear end (34), at least one cell (28) including a first obstacle (36) and a second obstacle (38) which extend transversely with respect to the main axis of the associated cell (28), from the wall (30) of said cell (28), the obstacles (36, 38) having a free end edge (40) which delimits a passage (42) with a part of the opposite wall (30) to increase the length of the path traveled by the sound waves through the cell (28),
the first obstacle (36) and the second obstacle (38) being offset along the main axis, the passage (42) delimited by the free end edge (40) of the first obstacle (36) and the passage (42) delimited by the free end edge (40) of the second obstacle (38) being radially offset so as to form a baffle intended to increase the length of the path traveled by the sound waves through the associated cell (28),
**characterized in that** at least one obstacle (36, 38) comprises a central part which extends transversely with respect to the main axis of the associated cell (28) and two lateral parts each extending in an oblique direction with respect to said main axis of the associated cell (28), each oblique direction being comprised between 30° and 60° with respect to the main axis.

2. The acoustic panel (12) according to claim 1, wherein a part of the free end of the first obstacle (36) and a part of the free end of the second obstacle (38) are superimposed along the main axis of the associated cell (28), to prevent the sound waves from drawing a direct path from the front end (32) up to the rear end (34) of the associated cell (28).

3. The acoustic panel (12) according to any one of the preceding claims, wherein the at least one cell (28) includes at least one acoustically permeable septum (46) which extends across the associated cell (28).

4. The acoustic panel (12) according to claim 3, wherein the septum (46) extends from the free end edge (40) of at least one obstacle (36, 38), up to the wall (30) of the associated cell (28).

5. The acoustic panel (12) according to claims 1 and 3, wherein the septum (46) extends from the free end edge (40) of the first obstacle (36), up to the free end edge (40) of the second obstacle (38).

6. The acoustic panel (12) according to any one of claims 1 to 5, wherein, for each cell (28), the peripheral wall (30) comprises six sides forming a hexagonal cell (28), at least one obstacle (36, 38) being fastened to at least two adjacent sides of the associated cell (28).

7. The acoustic panel (12) according to any one of claims 1 to 5, wherein, for each cell (28), the peripheral wall (30) comprises six sides forming a hexagonal cell (28), at least one obstacle (36, 38) being fastened to at least two non-adjacent sides of the associated cell (28).

8. A nacelle (10) for an aircraft propulsion unit, **characterized in that** it comprises at least one acoustic panel (12) according to any one of claims 1 to 7.

9. A method for manufacturing an acoustic panel (12) according to any one of claims 1 to 7, wherein each obstacle (36, 38) is made from at least one ribbon, **characterized in that** it comprises:
- a fastening step in which the at least one ribbon is fastened to a first plate, and in which a second plate is fastened to the first plate by respective nodal parts,
- a forming step in which non-nodal parts of the first and second plates are shaped so that each non-nodal part of the first plate constitutes, with a respective non-nodal part of the second plate, said peripheral wall delimiting a corresponding cell of the cellular core, and so that a part of the at least one ribbon forms the corresponding obstacle (36, 38) in this cell.

10. The method according to claim 9, wherein, during the fastening step, the at least one ribbon extends throughout said nodal parts of the first and second plates.

11. The method according to claim 9 or 10, wherein a strip is fastened to one end of the at least one ribbon during the fastening step and wherein, during the forming step, said part of the at least one ribbon forming the corresponding obstacle (36, 38) is shaped by pulling the strip.

12. The method according to any one of claims 9 to 11 for manufacturing an acoustic panel (12) according to claim 7, wherein the corresponding obstacle (36, 38) is fastened to three adjacent sides of the associated cell (28), these three adjacent sides being parts of the first plate or the second plate.

13. A method for manufacturing an acoustic panel (12) according to any one of claims 1 to 7, the acoustic panel (12) comprising a first plate and a second plate fastened together by nodal parts, non-nodal parts of the first and second plates forming walls delimiting cells (28) of the cellular core (24), this method being **characterized in that** it comprises a step of fastening the obstacles (36, 38) to a respective non-nodal part of the first and second plates.

14. The method according to any one of claims 9 to 13, wherein a first fastening leg of the corresponding obstacle (36, 38) is fastened to a non-nodal part of the first plate, the first leg extending in the direction of a first end (32) of the associated cell, and wherein a second fastening leg of the corresponding obstacle (36, 38) is fastened to a non-nodal part of the second plate, the second leg extending in the direction of a second end (34) of the associated cell.

15. The method according to any one of claims 9 to 13, wherein a first fastening leg of the corresponding obstacle (36, 38) is fastened to a non-nodal part of the first plate, the first leg extending in the direction of one of the ends (32) of the associated cell, and wherein a second fastening leg of the corresponding obstacle (36, 38) is fastened to a non-nodal part of the second plate, the second leg extending in the direction of the same end (34) of the associated cell.
